(19) 

**Europäisches Patentamt**
**European Patent Office**
**Office européen des brevets**

(11) **EP 4 227 860 A1**

(12) **EUROPEAN PATENT APPLICATION**

(43) Date of publication:
   **16.08.2023 Bulletin 2023/33**

(21) Application number: **22189452.0**

(22) Date of filing: **09.08.2022**

(51) International Patent Classification (IPC):
   $G06N\ 5/01$ (2023.01)   $G06N\ 7/01$ (2023.01)
   $G06N\ 7/08$ (2006.01)

(52) Cooperative Patent Classification (CPC):
   **G06N 5/01; G06N 7/01; G06N 7/08**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **KH MA MD TN**

(30) Priority: **15.02.2022   JP 2022021303**

(71) Applicant: **KABUSHIKI KAISHA TOSHIBA**
   **Minato-ku**
   **Tokyo**
   **105-0023 (JP)**

(72) Inventors:
   • **HIDAKA, Ryo**
     **Tokyo (JP)**
   • **TATSUMURA, Kosuke**
     **Tokyo (JP)**
   • **NAKAYAMA, Jun**
     **Tokyo (JP)**
   • **YAMASAKI, Masaya**
     **Tokyo (JP)**
   • **KASHIMATA, Tomoya**
     **Tokyo (JP)**

(74) Representative: **Marks & Clerk LLP**
   **15 Fetter Lane**
   **London EC4A 1BW (GB)**

(54) **CALCULATION DEVICE**

(57)   A calculation device (10) includes an updating module (28). The updating module (28) updates, for each of N particles, a first variable representing the position of a target particle and a second variable representing momentum of the target particle. M constrained solutions each include N constrained values. The first variable is updated to change to a first value when the first variable is smaller than the first value and change to a second value when the first variable is greater than the second value. The second variable is updated based on the first variable of each particle and a penalty component of the target particle. The penalty component represents momentum for shifting the position of the target particle toward an opposite polarity. The penalty component indicates a value being greater as the first variable corresponding to the target particle is closer to the M constrained solutions.

EP 4 227 860 A1

**Description**

FIELD

Embodiments described herein relate generally to a calculation device.

BACKGROUND

Optimization of complex systems in various application fields such as finance, logistics, control, and chemistry is often reduced to mathematical combinatorial optimization problems. Combinatorial optimization problems are problems of finding a combination of discrete values that minimizes a binary-variable function called a cost function.

In recent years, a specific-purpose device called Ising machine to search for a ground state of an Ising spin model has attracted attention. The Ising problem is a combinatorial optimization problem of minimizing the Ising energy. The Ising energy is represented by a cost function given by a quadratic function of Ising spins that are binary variables. Many practical combinatorial optimization problems can be converted into Ising problems. The Ising machine solves Ising problems fast. Many practical combinatorial optimization problems can be solved fast using the Ising machine.

Various algorithms have been proposed for solving combinatorial optimization problems using Ising models. Hardware that solves combinatorial optimization problems using Ising models has also been proposed. For example, a simulated bifurcation algorithm (SB algorithm) is known as one of the various algorithms for solving combinatorial optimization problems using Ising models. A simulated bifurcation machine is also known as an Ising machine that uses the SB algorithm.

When a combinatorial optimization problem is solved, there may be a situation in which it is desired to find not only the optimal solution but also multiple alternative solutions including near-optimal solutions or solutions exceeding given threshold values. For example, when a financial portfolio is solved as a combinatorial optimization problem, finding not only the most profitable combination but also the second and third most profitable combinations may scale up the investment strategy. The Ising machine such as the simulated bifurcation machine outputs one solution per run. In such a situation, therefore, the Ising machine such as the simulated bifurcation machine is run multiple times, and a solution that meets a condition is selected from among the found solutions.

However, when the Ising machine is run multiple times, the found solutions may contain duplicates of the same solution. It is therefore preferable that the Ising machine have the function of preventing calculation of duplicates of the same solution in a situation in which multiple alternative solutions are found for one combinatorial optimization problem, in order to reduce the total computational cost.

The problem to be solved by the present disclosure is to efficiently calculate multiple solutions to a 0-1 optimization problem with a small computational cost.

BRIEF DESCRIPTION OF THE DRAWINGS

FIG. 1 is a diagram illustrating a first example of the functional configuration of a calculation device;
FIG. 2 is a flowchart illustrating a process in the calculation device according to the first example;
FIG. 3 is a diagram illustrating a second example of the functional configuration of the calculation device;
FIG. 4 is a flowchart illustrating a process in the calculation device according to the second example;
FIG. 5 is a diagram illustrating a third example of the functional configuration of the calculation device;
FIG. 6 is a flowchart illustrating a first example of a process in the calculation device;
FIG. 7 is a flowchart illustrating a second example of the process in the calculation device;
FIG. 8 is a diagram illustrating a circuit configuration of a penalty calculation module with a z memory and an x memory;
FIG. 9 is a diagram illustrating a first configuration example of a preceding stage circuit with the memories;
FIG. 10 is a diagram illustrating a second configuration example of the preceding stage circuit with the memories;
FIG. 11 is a diagram illustrating a third configuration example of the preceding stage circuit with the memories;
FIG. 12 is a diagram illustrating a first configuration example of a subsequent stage circuit with the memories;
FIG. 13 is a diagram illustrating a second configuration example of the subsequent stage circuit with the memories;
FIG. 14 is a diagram illustrating a third configuration example of the subsequent stage circuit with the memories;
FIG. 15 is a diagram illustrating a configuration of an information processing system;
FIG. 16 is a diagram illustrating a configuration of a host device according to a first example with the calculation device;
FIG. 17 is a diagram illustrating a configuration of the host device according to a second example with the calculation device; and
FIG. 18 is a flowchart illustrating a process in a calculation instruction module according to the second example.

DETAILED DESCRIPTION

A calculation device according to one embodiment is a calculation device for solving a 0-1 optimization problem in which a quadratic function containing N binary variables is an objective function, N being an integer equal to or greater than 2. The calculation device includes a setting module, an updating module, and an output module. The setting module is configured to set M constrained solutions. M is an integer equal to or greater than 1. The updating module is configured to update, for each of virtual N particles, a first variable representing a position of a target particle and a second variable representing a momentum of the target particle sequentially and alternately every unit time from a start time to an end time. The output module is configured to output a solution for the 0-1 optimization problem on the basis of the first variable of each of the N particles at the end time. The N binary variables are 0 or 1. Each of the M constrained solutions includes N constrained values. The N constrained values correspond to the N binary variables. Each of the N constrained values is 0 or 1. The N particles correspond to the N binary variables. The updating module is configured to, for each of the N particles in an updating process of the every unit time, update the first variable on the basis of the second variable, change the first variable to a first value when the first variable is smaller than the first value, and change the first variable to a second value when the first variable is greater than the second value, the second value being greater than the first value, and update the second variable on the basis of the first variable of each of the N particles and a penalty component of the target particle. The penalty component of the target particle represents momentum per unit time for shifting the position of the target particle toward an opposite polarity, and indicates a value that is greater as the first variable corresponding to the target particle is closer to the M constrained solutions.

Embodiments will be described in detail below with reference to the drawings.

SB Algorithm

The Ising energy in an Ising spin model including N Ising spins (N is an integer equal to or greater than 2) is expressed by a cost function given by Equation (1). The cost function in Equation (1) is a quadratic function of Ising spins.

$$E(s) = -\frac{1}{2}\sum_{i=1}^{N}\sum_{j=1}^{N} J_{ij}s_i s_j + \sum_{i=1}^{N} h_i s_i \tag{1}$$

In Equation (1), $s_i$ and $s_j$ represent Ising spins and are binary variables of -1 or +1. $s_i$ is the i-th (where i is any integer of 1 through N, both inclusive) Ising spin in the N Ising spins. $s_j$ is the j-th (where j is any integer of 1 through N, both inclusive) Ising spin in the N Ising spins.

$J_{ij}$ is a coupling coefficient by which a quadratic term including the i-th Ising spin and the j-th Ising spin in the quadratic function is multiplied. J is a matrix containing N×N coupling coefficients and is called an interaction matrix. J has $J_{ij}$ at the i-th row and the j-th column.

$h_i$ is the external magnetic field coefficient by which a linear term including the i-th Ising spin is multiplied. h is a vector including N external magnetic field coefficients in which $h_i$ is arranged on the i-th, and called an external magnetic field vector.

The N-size Ising problem refers to a problem of calculating a spin configuration that minimizes the Ising energy for an Ising model containing N Ising spins. The spin configuration with the minimum energy is called the ground state.

A common 0-1 optimization problem of optimizing a combination of 0 or 1 can be expressed as an Ising problem defined using the interaction matrix (J) and the external magnetic field vector (h). The Ising machine receives J and h as the problem to be solved and searches for a spin configuration with lower Ising energy. The Ising machine outputs, as a solution, a spin configuration representing the values of N Ising spins obtained by the search. The spin configuration with the smallest Ising energy is called the exact solution. A spin configuration that is not an exact solution but has the Ising energy close to the minimum is called an approximate solution.

The SB algorithm is one of the algorithms for solving the Ising problems. The SB algorithm solves the Ising problem by simulating the time evolution of Hamiltonian in which virtual N particles bifurcate into two positions over time. In particular, the SB algorithm simulates the time evolution of N particles using equations of motion in which the computation of the interaction matrix is included only in the equation that calculates the momentum and the computation of the interaction matrix is not included in the equation that calculates the position. The SB algorithm therefore can simulate the time evolution of Hamiltonian using discrete solution methods such as the symplectic Euler method. Thus, the SB algorithm can find solutions fast with a small computational cost.

N particles correspond to N Ising spins in the Ising problem. The SB algorithm uses N variables $x_i$ and N variables $y_i$ corresponding to N particles. Each of the N variables $x_i$ represents the position of the i-th particle of N particles. N variables yi each represent the momentum of the i-th particle. The variable $x_i$ may be referred to as a first variable and the variable yi may be referred to as a second variable.

As versions of the SB algorithms, the adiabatic SB (aSB) algorithm, the ballistic SB (bSB) algorithm, and the discrete SB (dSB) algorithm are described in a document of the related art (for example, Hayato Goto, Kotaro Endo, Masaru Suzuki, Yoshisato Sakai, Taro Kanao, Yohei Hamakawa, Ryo Hidaka, Masaya Yamasaki, and Kosuke Tatsumura, "High-performance combinatorial optimization based on classical mechanics", Science Advances 7, 6 (2021), eabe7953).

The adiabatic SB algorithm treats the first variable ($x_i$) and the second variable (yi) as continuous variables represented by real numbers. The ballistic SB algorithm treats the first variable ($x_i$) as a continuous variable represented by a real number of a first value through a second value, both inclusive. The first value is, for example, -1 and the second value is, for example, +1. The discrete SB algorithm treats the first variable (xi) as a binary variable represented by a binary value of a first value or a second value.

The ballistic SB algorithm uses the equations of motion given by Equations (2-1) and (2-2). In Equations (2-1) and (2-2), the terms related to the external magnetic field coefficient are omitted.

$$\dot{y}_i = \frac{\partial H_{bSB}}{\partial x_i} = -\{a_0 - a(t)\}x_i + c_0 \sum_{j=1}^{N} J_{i,j}x_j \qquad (2\text{-}1)$$

$$\dot{x}_i = \frac{\partial H_{bSB}}{\partial y_i} = Dy_i \qquad (2\text{-}2)$$

$a_0$, $c_0$, and D represent predetermined constants. t is a variable representing time. a(t) is a control parameter that starts from 0 and changes with t. $H_{bSB}$ is the Hamiltonian and is given by Equation (3-1). $V_{bSB}$ in Equation (3-1) is given by Equation (3-2).

$$H_{bSB} = \frac{a_0}{2} \sum_{i=1}^{N} y_i^2 + V_{bSB} \qquad (3\text{-}1)$$

$$V_{bSB} = \frac{a_0 - a(t)}{2} \sum_{i=1}^{N} x_i^2 - \frac{c_0}{2} \sum_{i=1}^{N}\sum_{j=1}^{N} J_{ij}x_ix_j \qquad when\ |x_i| \qquad (3\text{-}2)$$
$$\leq 1\ for\ all\ x_i\ otherwise\ V_{bsb} = \infty$$

The ballistic SB algorithm simulates the time evolution of the equations of motion given by Equations (2-1) and (2-2) by alternately repeating the computations of Equations (4-1) and (4-2) while incrementing t by $\Delta t$. $\Delta t$ is a time step (unit time).

$$y_i(t + \Delta t) = y_i(t) + \left\{ -[a_0 - a(t)]x_i(t) + c_0 \sum_{j=1}^{N} J_{i,j}x_j(t) \right\}\Delta t \qquad (4\text{-}1)$$

$$x_i(t + \Delta t) = x_i(t) + Dy_i(t + \Delta t)\Delta t \qquad (4\text{-}2)$$

In addition, the ballistic SB algorithm determines whether $x_i$ is smaller than the first value (for example, -1) or whether $x_i$ is greater than the second value (for example, 1) greater than the first value, in each computation of Equation (4-2). The ballistic SB algorithm changes $x_i$ to the first value (-1) and changes yi to a predetermined value (for example, 0) when $x_i$ is smaller than the first value (for example, -1). When $x_i$ is greater than the second value (for example, 1), $x_i$

is changed to the second value (for example, 1) and yi is changed to a predetermined value (0). The ballistic SB algorithm does not change the value of $x_i$ and the value of yi when $x_i$ is the first value (for example, -1) through the second value (for example, 1), both inclusive.

The ballistic SB algorithm then binarizes each of the values of N variables $x_i$ by a predetermined threshold value (for example, 0) when t reaches a predetermined value, and outputs the binarized result as a solution for the 0-1 optimization problem.

The discrete SB algorithm simulates the time evolution of the equations of motion by alternately repeating $x_i$ and yi while incrementing t by Δt, in the same manner as the ballistic SB algorithm. However, the discrete SB algorithm changes the value of $x_i$ to -1 or 1, for each updating of $x_i$, in accordance with a determination on whether $x_i$ is smaller than a predetermined threshold value (for example, 0) or equal to or greater than the threshold value (for example, 0).

Improved Algorithm

The improved algorithm according to the present embodiment is an algorithm that solves a 0-1 optimization problem in which a quadratic function containing N binary variables is an objective function. The improved algorithm is an improved algorithm of the ballistic SB algorithm or the discrete SB algorithm. The improved algorithm is an algorithm that adds a penalty (P) to the equations of motion in the ballistic SB algorithm or the discrete SB algorithm so that the same solutions as M (M is an integer equal to or greater than 1) constrained solutions are not calculated.

Each of M constrained solutions is one of the solutions to the 0-1 optimization problem in which a quadratic function containing N binary variables is an objective function. Each of M constrained solutions includes N constrained values. Each of N constrained values represents 0 or 1. Each of M constrained solutions may be a solution for the same problem calculated in the past using the Ising machine or may be, for example, a value artificially set.

The improved algorithm uses equations in which a penalty component of a target particle is added to the momentum of each of N particles in the ballistic SB algorithm or the discrete SB algorithm. For example, the equations of motion in the improved algorithm obtained by improving the ballistic SB algorithm are given by Equations (5-1) and (5-2). In Equations (5-1) and (5-2), the terms related to the external magnetic field coefficient are omitted.

$$\dot{y}_i = \frac{\partial H_{bSB}}{\partial x_i} = -\{a_0 - a(t)\}x_i + c_0 \sum_{j=1}^{N} J_{i,j}x_j + \frac{\partial P}{\partial x_i} \qquad (5\text{-}1)$$

$$\dot{x}_i = \frac{\partial H_{bSB}}{\partial y_i} = Dy_i \qquad (5\text{-}2)$$

$H_{bSB}$ is the Hamiltonian and is given by Equation (6-1). $V_{bSB}$ in Equation (6-1) is given by Equation (6-2).

$$H_{bSB} = \frac{a_0}{2} \sum_{i=1}^{N} y_i^2 + V_{bSB} \qquad (6\text{-}1)$$

$$V_{bSB} = \frac{a_0 - a(t)}{2} \sum_{i=1}^{N} x_i^2 - \frac{c_0}{2} \sum_{i=1}^{N}\sum_{j=1}^{N} J_{ij}x_i x_j + P \qquad when \ |x_i| \qquad (6\text{-}2)$$
$$\leq 1 \ for \ all \ x_i \ otherwise \ V_{bsb} = \infty$$

$\partial P/\partial x_i$ represents the penalty component of the i-th particle in the N particles. P represents a penalty obtained by synthesizing the penalty components of N particles.

The penalty component of the i-th particle represents the momentum per unit time for shifting the position of the i-th particle toward the opposite polarity from the current position. The penalty component of the i-th particle indicates a value that is greater as the position of the i-th particle is closer to M constrained solutions.

The improved algorithm simulates the time evolution of the equations of motion given by Equations (5-1) and (5-2) by alternately repeating the computations of Equations (7-1) and (7-2) while incrementing t by At.

$$y_i(t + \Delta t) = y_i(t) + \left\{ -[a_0 - a(t)]x_i(t) + c_0 \sum_{j=1}^{N} J_{i,j}x_j(t) + \frac{\partial P(t)}{\partial x_i(t)} \right\} \Delta t \quad (7\text{-}1)$$

$$x_i(t + \Delta t) = x_i(t) + D y_i(t + \Delta t)\Delta t \quad (7\text{-}2)$$

In addition, the improved algorithm determines whether $x_i$ is smaller than the first value (for example, -1) or whether $x_i$ is greater than the second value (for example, 1) greater than the first value, every time of computation of Equation (7-2). The improved algorithm changes $x_i$ to the first value (-1) and changes yi to a predetermined value (for example, 0) when $x_i$ is smaller than the first value (for example, -1). When $x_i$ is greater than the second value (for example, 1), $x_i$ is changed to the second value (for example, 1) and yi is changed to a predetermined value (0). The improved algorithm does not change the value of $x_i$ and the value of yi when $x_i$ is the first value (for example, -1) through the second value (for example, 1), both inclusive.

The improved algorithm then binarizes each of the values of N variables $x_i$ by a predetermined threshold value (for example, 0) when t reaches a predetermined value, and outputs the binarized result as a solution for the 0-1 optimization problem. Such an improved algorithm can output a solution for the 0-1 optimization problem fast with a small computational cost so that the same solutions as M constrained solutions are not calculated.

The improved algorithm may be applied to the discrete SB algorithm. The improved algorithm applied to the discrete SB algorithm also simulates the time evolution of the equations of motion by alternately repeating $x_i$ and yi while incrementing t by $\Delta$t, using the equation in which a penalty component of a target particle is added to the momentum of each of the N particles. Note that the discrete SB algorithm changes the value of $x_i$ to -1 or 1, for each updating of $x_i$, in accordance with a determination on whether $x_i$ is smaller than a predetermined threshold value (for example, 0) or equal to or greater than the threshold value (for example, 0).

The penalty (P), which is added to the momentum such that the same solutions as M constrained solutions are not calculated, is given by the function in Equation (8).

$$P = M_p \sum_{k=1}^{M} \left\{ \prod_{j=1}^{N} \left\{ \frac{z_{k,j}(x_j + 1)}{2} + \frac{(1 - z_{k,j})(1 - x_j)}{2} \right\} \right\} \quad (8)$$

$M_p$ is a predetermined penalty coefficient and is a negative real number. k is any integer of 1 through M, both inclusive. $z_{k,j}$ represents the j-th constrained value included in the k-th constrained solution in M constrained solutions.

The inside of the parentheses of $\Pi$ in P expressed by the function in Equation (8) is greater as $x_j$ is closer to -1 when $z_{k,j}$ is 0, and greater as $x_j$ is closer to 1 when $z_{k,j}$ is 1. That is, the inside of the parentheses of $\Pi$ in P represents a distance component that is greater as the possibility that $x_j$ binarized to 0 or 1 is identical to $z_{k,j}$ is higher. In other words, $\Pi$ in P represents the result of multiplying such a distance component for N $x_j$ (partial penalty value). P then represents the result of adding up M partial penalty values corresponding to M constrained solutions by $\Sigma$.

Each of the M partial penalty values (that is, the computation results of $\Pi$ in Equation (8)) is an expression that multiplies all the distance components of N particles. The distance component of each of the N particles is 0 when $x_j$ is -1 and $z_{k,j}$ is 1 or when $x_j$ is 1 and $z_{k,j}$ is 0. In other words, the distance component is 0 when $x_j$ binarized to 0 or 1 is an opposite polarity variable that is not the same as $z_{k,j}$. Thus, each of the M partial penalty values is 0 when any of N $x_1$ to $x_N$ includes an opposite polarity variable.

With this configuration, the improved algorithm can set the penalty to 0, in a state in which a solution very close to the constrained solution is found, for example, (N-1) in N $x_1$ to $x_N$ have the same value as the constrained solution but one of the N $x_1$ to $x_N$ is not the same as the constrained solution. The improved algorithm therefore can find solutions different from M constrained solutions without eliminating solutions very close to M constrained solutions.

P can also be expressed by Equation (9).

$$P = M_p \sum_{k=1}^{M} p_k \tag{9}$$

$P_k$ is a partial penalty value that is the penalty for the k-th constrained solution in M constrained solutions. That is, P is a value obtained by multiplying the sum of all the partial penalty values $P_1$ to $P_M$ in M constrained solutions by the penalty coefficient ($M_p$).

The partial penalty value Pk for the k-th constrained solution in M constrained solutions is given by Equation (10).

$$p_k = \prod_{j=1}^{N} \left\{ \frac{z_{k,j}(x_j + 1)}{2} + \frac{(1 - z_{k,j})(1 - x_j)}{2} \right\} \tag{10}$$

Pk is expressed by a function that multiplies the distance component representing the distance between the position of each of the N particles and the corresponding constrained value included in the k-th constrained solution, for all N particles. The distance component of the j-th particle in the partial penalty value for the k-th constrained solution is -1 when $x_j$ is -1 and the j-th constrained value $z_{k,j}$ included in the k-th constrained solution is 0. The distance component of the j-th particle is 0 when $x_j$ is -1 and $z_{k,j}$ is 1. The distance component of the j-th particle is 0 when $x_j$ is 1 and the j-th constrained value $z_{k,j}$ is 0. The distance component of the j-th particle is 1 when $x_j$ is 1 and $z_{k,j}$ is 1. Then, when $x_j$ is greater than -1 and smaller than 1, the distance component of the j-th particle is greater as the position of the j-th particle (xj) projected to a range of 0 through 1, both inclusive, is closer to $z_{k,j}$.

In other words, when N first variables do not include an opposite polarity variable, the partial penalty value for a target constrained solution in M constrained solutions is greater as the target constrained solution is closer to the N first variables. However, when N first variables include an opposite polarity variable, the partial penalty value for the target constrained solution is 0. The opposite polarity variable is a first variable that is a first value (for example, -1) or a second value (for example, 1). When the first variable is the first value (for example, -1), the corresponding constrained value in N constrained values included in the target constrained solution is 1. When the first variable is the second value (for example, 1), the corresponding constrained value in N constrained values included in the target constrained solution is 0.

The partial penalty component of the target particle for the target constrained solution in M constrained solutions is a component of the target particle in the partial penalty value for the target constrained solution. For example, the component of the i-th particle ($\partial P_k / \partial x_i$) in the partial penalty value (Pk) for the k-th constrained solution is expressed by a function of the partial differentiation of Equation (10) with respect to $x_i$. That is, the component of the i-th particle ($\partial P_k / \partial x_i$) in the partial penalty value ($P_k$) for the k-th constrained solution is given by Equation (11).

$$\frac{\partial p_k}{\partial x_i} = \frac{p_k}{z_{k,i}(x_i + 1) + (1 - z_{k,i})(x_i - 1)} \tag{11}$$

The value obtained by adding up the partial penalty component ($\partial P_k / \partial x_i$) of the i-th particle in each of the M constrained solutions, for the M constrained solutions, and multiplying the resulting sum by a predetermined penalty coefficient ($M_p$) is given by Equation (12).

$$\frac{\partial P}{\partial x_i} = M_p \sum_{k=1}^{M} \frac{\partial p_k}{\partial x_i} \tag{12}$$

Equation (12) represents the penalty component ($\partial P / \partial x_i$) of the i-th target particle in N particles in Equation (5-1). In other words, the penalty component of each of the N particles indicates a value obtained by adding up the partial penalty component of the target particle of each of the M constrained solutions, for the M constrained solutions, and multiplying the resulting sum by a predetermined penalty coefficient ($M_p$). Thus, the penalty component for each of N particles is calculated by calculating the partial penalty value ($P_k$) in Equation (10) for each of the M constrained solutions, and then performing the computations of Equations (11) and (12).

Thus, the improved algorithm can calculate the penalty component for each of the N particles by calculating the partial penalty value ($P_k$) given by Equation (10) for each of the M constrained solutions, and then performing the computations of Equations (11) and (12).

Calculation Device 10

A configuration of a calculation device 10 that executes the improved algorithm will now be described.

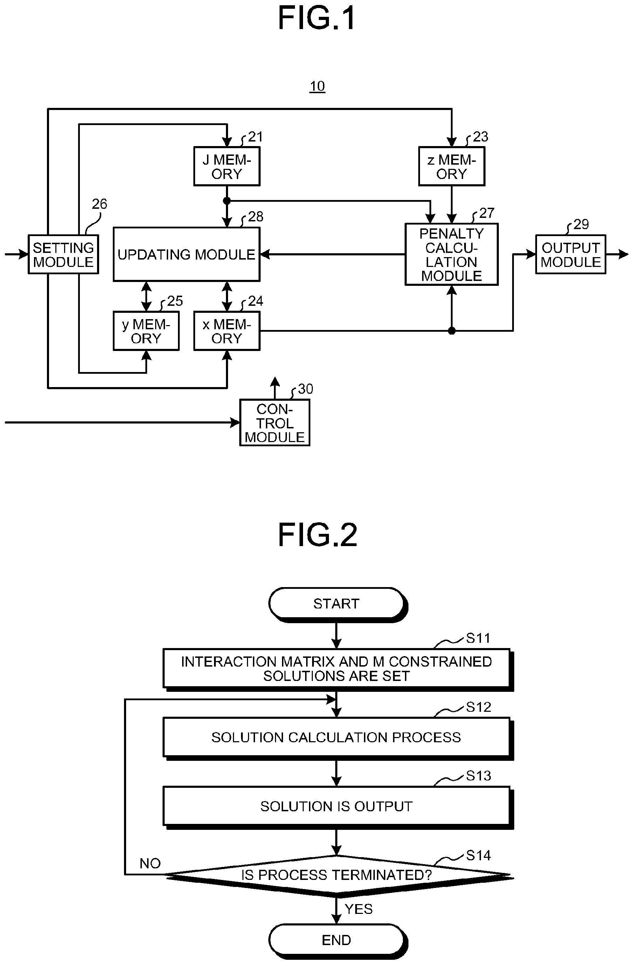

FIG. 1 is a diagram illustrating a first example of the functional configuration of the calculation device 10. The calculation device 10 uses the improved algorithm to output a solution different from M constrained solutions in the 0-1 optimization problem in which a quadratic function containing N binary variables is an objective function.

The calculation device 10 is implemented, for example, by circuitry such as a fieldprogrammable gate array (FPGA). The calculation device 10 may be implemented by an information processing device such as a computer, a computer system including two or more computers or servers mutually communicating via a network, or a PC cluster in which two or more computers work together to perform information processing. The calculation device 10 may be implemented by a central processing unit (CPU), a microprocessor, a graphics processing unit (GPU), an application specific integrated circuit (ASIC), or electronic circuitry including these circuits etc.

The calculation device 10 according to the first example includes a J memory 21 (interaction coefficient memory), a z memory 23 (constrained solution memory), an x memory 24 (first memory), a y memory 25 (second memory), a setting module 26, a penalty calculation module 27, an updating module 28, an output module 29, and a control module 30.

The J memory 21 stores the interaction matrix (J). That is, the J memory 21 stores N×N interaction coefficients ($J_{i,k}$).

The z memory 23 stores M constrained solutions. That is, the z memory 23 stores N constrained values ($z_{k,j}$) included in each of the M constrained solutions.

The x memory 24 stores N first variables ($x_i$) calculated during the course of the computation in accordance with the improved algorithm. The N first variables ($x_i$) stored in the x memory 24 are updated every unit time.

The y memory 25 stores N second variables (yi) calculated during the course of the computation in accordance with the improved algorithm. The N second variables (yi) stored in the y memory 25 are updated every unit time.

The setting module 26 acquires the 0-1 optimization problem from an external device. The setting module 26 sets the interaction matrix (J) in the J memory 21 in accordance with the acquired 0-1 optimization problem. The setting module 26 further acquires M constrained solutions from an external device. The setting module 26 sets the acquired M constrained solutions in the z memory 23.

The penalty calculation module 27 calculates the penalty component ($\partial P/\partial x_i$) of a target particle for each of the N particles, in accordance with the improved algorithm. More specifically, the penalty calculation module 27 calculates, for each of the N particles, the penalty component ($\partial P/\partial x_i$) of a target particle every unit time.

The updating module 28 updates, for each of the N particles, N first variables ($x_i$) stored in the x memory 24 and N second variables (yi) stored in the y memory 25 in accordance with the improved algorithm. More specifically, the updating module 28 updates, for each of the N particles, the first variable ($x_i$) representing the position of the target particle and the second variable (yi) representing the momentum of the target particle sequentially and alternately every unit time from the start time to the end time.

In the updating process of every unit time, the updating module 28 updates, for each of the N particles, the first variable (xi) on the basis of the second variable (yi). When the first variable ($x_i$) is smaller than the first value (for example, -1), the updating module 28 changes the first variable ($x_i$) to the first value (for example, -1) and changes the second variable (yi) to a predetermined value (for example, 0). When the first variable ($x_i$) is greater than the second value (for example, 1), the updating module 28 changes the first variable ($x_i$) to the second value (for example, 1) and changes the second variable (yi) to a predetermined value (for example, 0).

In the updating process of every unit time, the updating module 28 updates the second variable (yi) on the basis of the first variable ($x_i$) of each of the N particles and the penalty component ($\partial P/\partial x_i$) of the target particle. The penalty component ($\partial P/\partial x_i$) of the target particle represents the momentum per unit time for shifting the position of the target particle toward the opposite polarity, and indicates a value that is greater as N first variables ($x_i$) are closer to M constrained solutions.

For example, the penalty component ($\partial P/\partial x_i$) of the target particle indicates a value obtained by adding the partial penalty component ($\partial P_k/\partial x_i$) of the target particle of each of the M constrained solutions, for the M constrained solutions, and multiplying the resulting sum by a predetermined penalty coefficient ($M_p$). The partial penalty component ($\partial P_k/\partial x_i$) of the target particle for the target constrained solution in M constrained solutions is the component of the target particle in the partial penalty value ($P_k$) for the target constrained solution.

When N first variables ($x_i$) do not include an opposite polarity variable, the partial penalty value ($P_k$) for a target constrained solution is greater as the target constrained solution is closer to the N first variables. When N first variables ($x_i$) include an opposite polarity variable, the partial penalty value ($P_k$) for the target constrained solution is 0. The opposite polarity variable is the first variable $(x_i)$ that is the first value (e.g., -1) or the second value (e.g., +1). When the first variable $(x_i)$ is the first value (for example, -1), the corresponding constrained value in N constrained values included in the target constrained solution is 1. When the first variable $(x_i)$ is the second value (for example, 1), the corresponding constrained value in N constrained values included in the target constrained solution is 0.

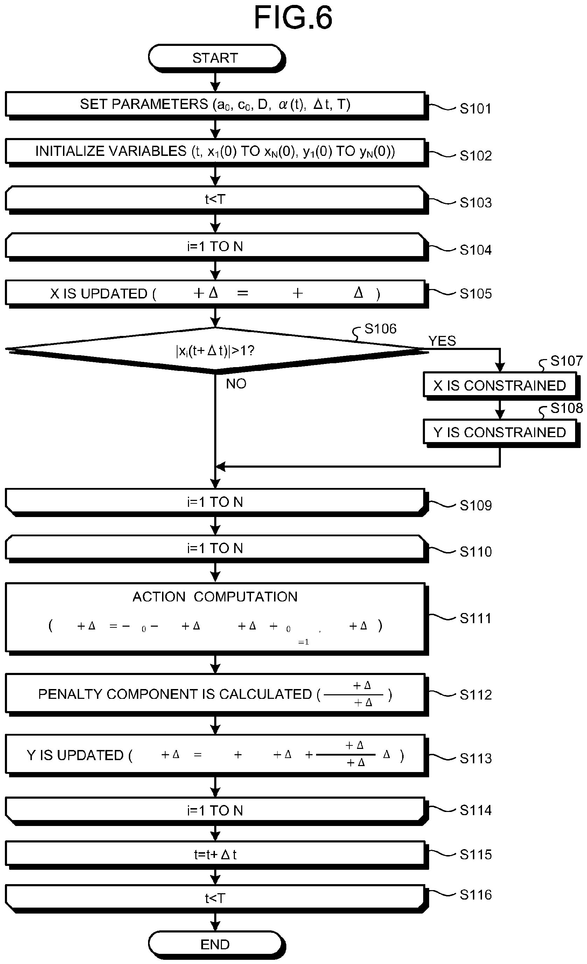

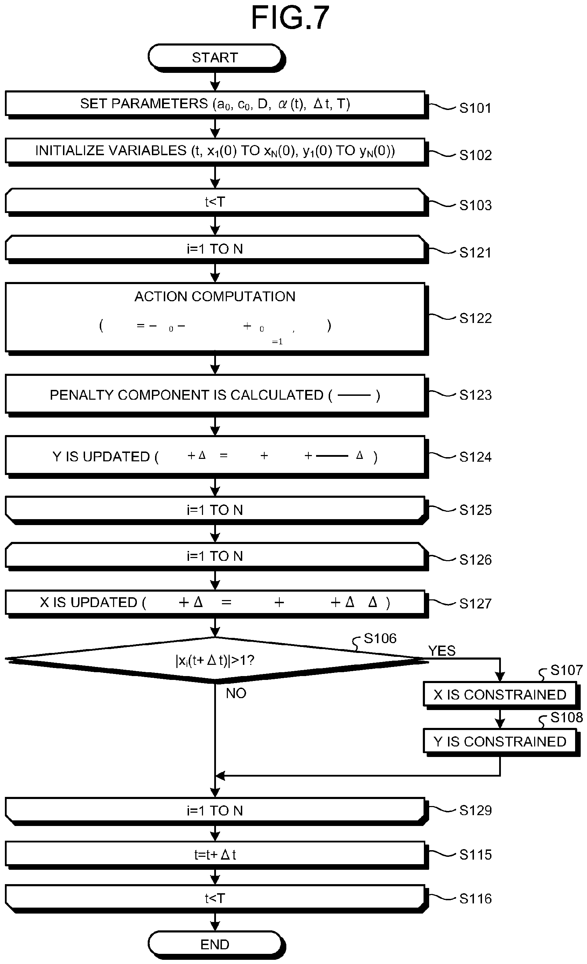

The more specific process of the penalty calculation module 27 and the updating module 28 will be further described with reference to FIG. 6 and FIG. 7.

The output module 29 acquires, from the x memory 24, the first variable $(x_i)$ of each of the N particles at the end time updated by the updating module 28 in accordance with the improved algorithm, and generates a solution for the 0-1 optimization problem. For example, the output module 29 generates a solution for the 0-1 optimization problem by binarizing the first variable $(x_i)$ of each of the acquired N particles to 0 or 1, with 0 as the threshold value. The output module 29 then outputs the solution for the 0-1 optimization problem to an external device.

The control module 30 sets various parameters in the penalty calculation module 27 and the updating module 28 prior to the calculation of the improved algorithm. In addition, the control module 30 controls the iterative process of every unit time from the start time to the end time in the penalty calculation module 27 and the updating module 28.

FIG. 2 is a flowchart illustrating a process in the calculation device 10 according to the first example. The calculation device 10 according to the first example performs a process according to the flow illustrated in FIG. 2.

First of all, at S11, the setting module 26 sets the interaction matrix (J) acquired from an external device in the J memory 21. The setting module 26 sets M constrained solutions acquired from an external device in the z memory 23.

Subsequently, at S12, the updating module 28 and the penalty calculation module 27 use the set interaction matrix (J) to calculate a solution for the 0-1 optimization problem that minimizes the objective function defined by the interaction matrix (J). In this case, the updating module 28 and the penalty calculation module 27 calculate a solution different from the set M constrained solutions. The process details of the updating module 28 and the penalty calculation module 27 at S12 will be described later with reference to FIG. 6 and FIG. 7.

Subsequently, at S13, the output module 29 outputs the solution for the 0-1 optimization problem calculated at S12.

Subsequently, at S14, the control module 30 determines whether a termination condition is satisfied. For example, the calculation device 10 may output multiple solutions. For example, the control module 30 determines that the termination condition is satisfied when a preset number of solutions are output, when a preset process time has elapsed, or when a preset event occurs. If the termination condition is not satisfied (No at S14), the control module 30 returns the process to S12 to calculate a solution for the 0-1 optimization problem again. If the termination condition is satisfied (Yes at S14), the control module 30 terminates the process.

The calculation device 10 according to the first example described above is capable of efficiently calculating a solution for the 0-1 optimization problem different from preset M constrained solutions, with a small computational cost.

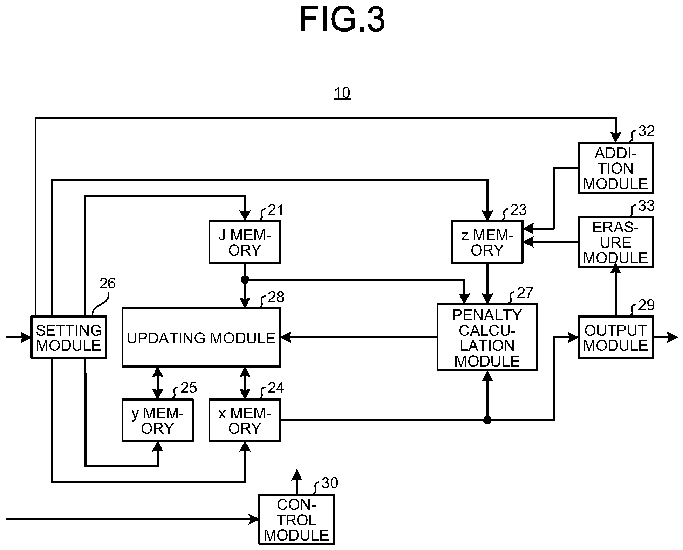

FIG. 3 is a diagram illustrating a second example of the functional configuration of the calculation device 10. The calculation device 10 according to the second example has substantially the same functions and configuration as those of the calculation device 10 according to the first example illustrated in FIG. 1, and the components having substantially the same functions are denoted by the same reference signs and will not be further elaborated.

The calculation device 10 according to the second example further includes an addition module 32 and an erasure module 33, in addition to the configuration of the calculation device 10 according to the first example.

The control module 30 according to the second example causes the updating module 28 to perform a calculation process from the start time to the end time multiple times. The control module 30 then causes the output module 29 to output a solution for the 0-1 optimization problem multiple times.

The setting module 26 according to the second example may repeatedly acquire a 0-1 optimization problem from an external device. For example, the setting module 26 according to the second example may acquire a first 0-1 optimization problem and then, after a time interval, acquire a second 0-1 optimization problem different from the first 0-1 optimization problem. The setting module 26 according to the second example sets the interaction matrix (J) in accordance with the acquired 0-1 optimization problem in the J memory 21 every time it acquires a 0-1 optimization problem.

When changing some of the interaction coefficients of the interaction matrix (J) previously set in the interaction matrix (J), the setting module 26 according to the second example may rewrite only the changed interaction coefficients and not necessarily rewrite the unchanged interaction coefficients. With this configuration, the setting module 26 according to the second example can reduce the time required to rewrite the interaction matrix (J).

The setting module 26 may add a new constrained solution for M constrained solutions immediately previously set, or delete or change some or all of the M constrained solutions, in accordance with instructions from an external device. In this case, the z memory 23 may store a flag indicating "valid" or "invalid" for each of the set M constrained solutions. When some or all of the M constrained solutions are deleted, the setting module 26 may change the values of the flags from "valid" to "invalid", instead of erasing the data itself. With this configuration, the setting module 26 can reduce the time required to delete some or all of the M constrained solutions.

The addition module 32 acquires the calculated solution for the 0-1 optimization problem when the updating module 28 performs one calculation process from the start time to the end time. The addition module 32 then adds the acquired solution as one of the M constrained solutions to the M constrained solutions stored in the z memory 23.

The erasure module 33 erases the M constrained solutions stored in the z memory 23 when the 0-1 optimization problem is changed. When the z memory 23 stores a flag indicating "valid" or "invalid" for each of the set M constrained solutions, the erasure module 33 may erase the M constrained solutions by changing the value of the flag for each of the M constrained solutions from "valid" to "invalid". With this configuration, the erasure module 33 can reduce the time required to delete M constrained solutions.

In the calculation process initially performed after the 0-1 optimization problem is updated, the updating module 28 and the penalty calculation module 27 set the penalty component of the target particle to 0 when a new constrained solution is not set by an external device.

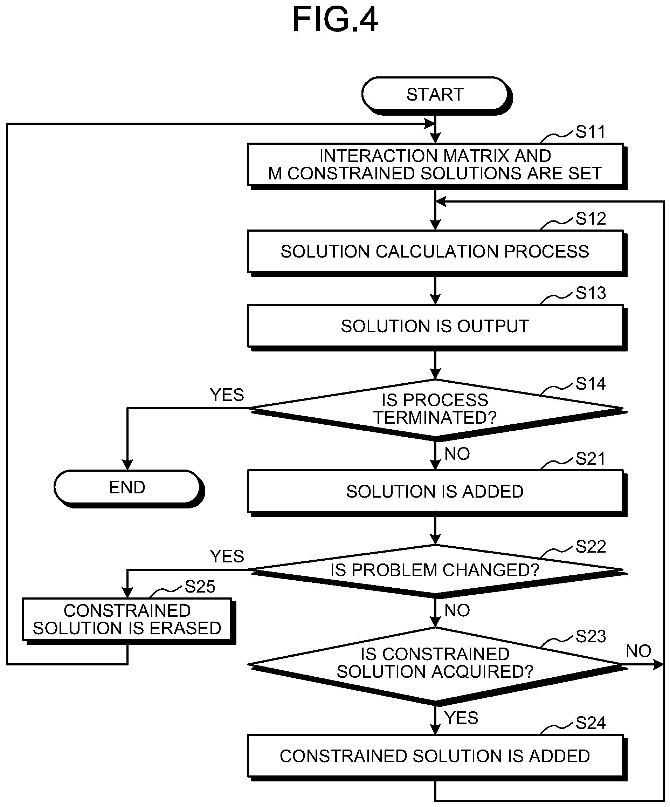

FIG. 4 is a flowchart illustrating a process in the calculation device 10 according to the second example. The calculation device 10 according to the second example performs a process according to the flow illustrated in FIG. 2. In the flowchart in FIG. 4, substantially the same steps as those in the calculation device 10 according to the first example illustrated in FIG. 2 are denoted by the same step numbers.

First of all, at S11, the setting module 26 performs the same process as S11 in the first example illustrated in FIG. 2. The setting module 26 according to the second example may be configured not to acquire M constrained solutions from an external device. In this case, the setting module 26 does not set M constrained solutions in the z memory 23. When the setting module 26 does not set M constrained solutions in the z memory 23, the updating module 28 and the penalty calculation module 27 calculate a solution by setting the penalty component of the target particle to 0 in the calculation process initially performed after the 0-1 optimization problem is updated.

Subsequently, at S12, the updating module 28 and the penalty calculation module 27 perform the same process as S12 in the first example illustrated in FIG. 2. Subsequently, at S13, the output module 29 performs the same process as S13 in the first example illustrated in FIG. 2. Subsequently, at S14, the control module 30 performs the same process as S14 in the first example illustrated in FIG. 2. If the termination condition is not satisfied (No at S14), the control module 30 proceeds to S21.

At S21, the addition module 32 adds the solution output by the output module 29 at S13 to the z memory 23. Subsequently, at S22, the control module 30 determines whether the 0-1 optimization problem is changed. If the 0-1 optimization problem is not changed (No at S22), the control module 30 proceeds to S23. If the 0-1 optimization problem is changed (Yes at S22), the control module 30 proceeds to S25.

At S23, the setting module 26 determines whether a new constrained solution is received from an external device. If a new constrained solution is not received (No at S23), the setting module 26 proceeds to S12 to repeat the process from S12.

If a new constrained solution is received (Yes at S23), the setting module 26 proceeds to S24. At S24, the setting module 26 adds the newly received constrained solution for the z memory 23 as one of the M constrained solutions. After finishing S24, the setting module 26 proceeds to S12 to repeat the process from S12.

At S25, the erasure module 33 erases the M constrained solutions stored in the z memory 23. The erasure module 33 may erase the M constrained solutions by changing the value of the flag for each of the M constrained solutions from "valid" to "invalid". After finishing S25, the erasure module 33 returns the process to S11 to repeat the process from S11.

The calculation device 10 according to the second example described above can sequentially acquire 0-1 optimization problems one by one and calculate multiple solutions for each of the 0-1 optimization problems. In addition, the calculation device 10 according to the second example can efficiently calculate multiple solutions with no duplicates for each of the 0-1 optimization problems, with a small computational cost.

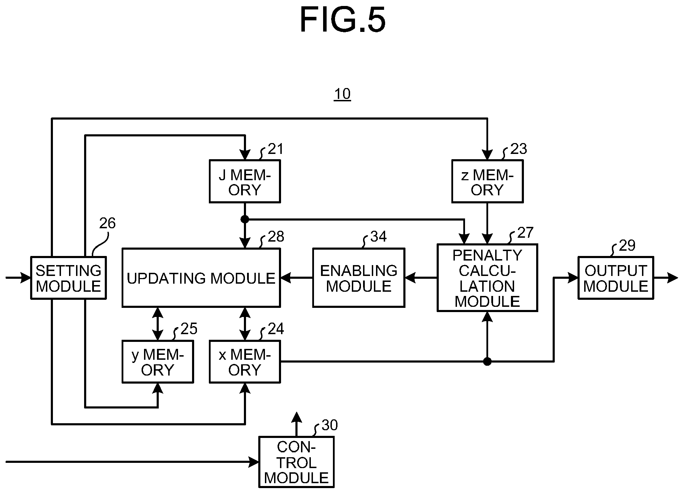

FIG. 5 is a diagram illustrating a third example of the functional configuration of the calculation device 10. The calculation device 10 according to the third example has substantially the same functions and configuration as those of the calculation device 10 according to the first example illustrated in FIG. 1, and the components having substantially the same functions are denoted by the same reference signs and will not be further elaborated.

The calculation device 10 according to the third example further includes an enabling module 34. The enabling module 34 causes the updating module 28 to update the second variable (yi) by setting the penalty component of the target particle to 0 until a preset setting time between the start time and the end time. Then, after the setting time, the enabling module 34 causes the second variable (yi) to be updated using the penalty component calculated by the penalty calculation module 27.

The SB algorithm simulates the time evolution of N particles by updating N first variables ($x_i$) and N second variables (yi). In the SB algorithm, as the updating process proceeds and the time elapses, the value of each of the N first variables ($x_i$) approaches to a solution. The SB algorithm therefore reveals whether the N first variables ($x_i$) are approaching M constrained solutions to some extent as the time elapses. The calculation device 10 according to the third example therefore calculates the penalty component ($\partial P/\partial x_i$) of the target particle at the timing when it is revealed that N first variables ($x_i$) are approaching M constrained solutions, and adds the calculated penalty component to the computation of the momentum. With this configuration, the calculation device 10 according to the third example can efficiently calculate a solution for the 0-1 optimization problem different from M constrained solutions, with a small computational cost.

The calculation device 10 according to the second example may include the enabling module 34. With this configuration, the calculation device 10 can efficiently calculate multiple solutions with no duplicates for each of the 0-1 optimization problems, with a small computational cost.

Process in Calculation Device 10

FIG. 6 is a diagram illustrating a first example of a process of the calculation device 10. The calculation device 10 illustrated in FIG. 1, FIG. 3, and FIG. 5 performs the process, for example, according to the flow illustrated in FIG. 6 in the solution calculation process.

First of all, at S101, the control module 30 sets parameters. Specifically, the control module 30 sets the coefficients $a_0$, $c_0$, and D, the function a(t), $\Delta t$ representing unit time, and T representing the end time. a(t) is an increasing function taking 0 at t = initial time (for example, 0) and 1 at t = end time (T). The control module 30 may set $a_0$, $c_0$, D, a(t), $\Delta t$, and T in accordance with preset parameters from the users or may set parameters determined in advance and unable to be changed.

Subsequently, at S102, the control module 30 initializes the variables. Specifically, the updating module 28 initializes t that is a variable denoting time to the initial time (for example, 0). Moreover, the updating module 28 substitutes an initial value received from the user, a predetermined fixed value, or a random number into each of the N first variables ($x_1(t)$ to $x_N(t)$) and each of the N second variables ($y_1$ to $y_N$) and stores the substituted values into the x memory 24 and the y memory 25.

Subsequently, the updating module 28 repeats the loop process between S103 and S116 until t becomes greater than T. In one loop process, the updating module 28 calculates N first variables ($x_1(t+\Delta t)$ to $x_N(t+\Delta t)$) at the target time ($t+\Delta t$) on the basis of N second variables ($y_i(t)$ to $y_N(t)$) at the previous time (t). In one loop process, the updating module 28 calculates N second variables ($y_1(t+\Delta t)$ to $y_N(t+\Delta t)$) at the target time ($t+\Delta t$) on the basis of N first variables ($x_1(t+\Delta t)$ to $x_N(t+\Delta t)$) at the target time ($t+\Delta t$) and the penalty component ($\partial P(t+\Delta t)/\partial x_i(t+\Delta t)$) of the target particle at the target time ($t+\Delta t$).

The previous time (t) is the time a unit time ($\Delta t$) before the target time ($t+\Delta t$). That is, the updating module 28 repeats the loop process between S103 and S116 to sequentially update N first variables ($x_1(t)$ to $x_N(t)$) and N second variables ($y_1(t)$ to $y_N(t)$) every unit time ($\Delta t$) from the initial time (t=0) to the end time (t=T).

Subsequently, the updating module 28 repeats the loop process between S104 and S109 while incrementing i by one from i=1 to i=N. i is an integer from 1 to N and is an index representing the target particle in N particles. Each of the N particles is associated with the first variable ($x_i(t)$) and the second variable ($y_i(t)$). In the loop process between S104 and S109, the updating module 28 performs the process for the i-th particle in N particles as a target particle.

At S105, the updating module 28 calculates the first variable ($x_i(t+\Delta t)$) of the target particle at the target time ($t+\Delta t$) by adding a value obtained by multiplying the second variable ($y_i(t)$) of the target particle at the previous time (t) by the predetermined coefficient (D) and the unit time ($\Delta t$), to the first variable ($x_i(t)$) of the target particle at the previous time (t). Specifically, the updating module 28 calculates Equation (13).

$$x_i(t + \Delta t) = x_i(t) + Dy_i(t)\Delta t \qquad (13)$$

Subsequently, at S106, the updating module 28 determines whether the absolute value ($|x_i(t+\Delta t)|$) of the first variable of the target particle at the target time ($t+\Delta t$) is greater than a predetermined second value. In the present example, the second value is 1. The second value is the unit amount of the first variable ($x_i(t)$) that is a continuous quantity. In the present example, the first value is -1. The first value is the unit amount of the first variable ($x_i(t)$) with a minus sign. That is, at S106, the updating module 28 determines whether the first variable ($x_i(t+\Delta t)$) of the target particle at the target time ($t+\Delta t$) is smaller than the first value (-1) or greater than the second value (1), or the first value (-1) through the second value (1), both inclusive. If the absolute value ($|x_i(t+\Delta t)|$) of the first variable of the target particle at the target time ($t+\Delta t$) is equal to or smaller than the second value, the updating module 28 proceeds to S109 (No at S106). If the absolute value ($|x_i(t+\Delta t)|$) of the first variable of the target particle at the target time ($t+\Delta t$) is greater than the second value, the updating module 28 proceeds to S107.

At S107, the updating module 28 performs a constraining process for the first variable ($x_i(t+\Delta t)$) of the target particle at the target time ($t+\Delta t$). Specifically, when the first variable ($x_i(t+\Delta t)$) of the target particle at the target time ($t+\Delta t$) is smaller than the first value (-1), the updating module 28 changes the first variable ($x_i(t+\Delta t)$) to the first value (-1). When the first variable ($x_i(t+\Delta t)$) of the target particle at the target time ($t+\Delta t$) is greater than the second value (1), the updating module 28 changes the first variable ($x_i(t+\Delta t)$) to the second value (1).

Subsequently, at S108, the updating module 28 performs a constraining process for the second variable ($y_i(t)$) of the target particle at the previous time ($t$). Specifically, the updating module 28 changes the second variable ($y_i(t)$) of the target particle at the previous time ($t$) to 0. When S108 is finished, the updating module 28 proceeds to S109.

When the loop process between S104 and S109 is performed N times, the updating module 28 proceeds to S110.

Subsequently, the updating module 28 repeats the loop process between S110 and S114 while incrementing i by one from i=1 to i=N. In the loop process between S110 and S114, the updating module 28 performs the process for the i-th particle in N particles as a target particle.

At S111, the updating module 28 calculates the external force ($f_i(t+\Delta t)$) on the basis of the first variable ($x_1(t+\Delta t)$ to $x_N(t+\Delta t)$) at the target time ($t+\Delta t$) for each of the N particles and an interaction coefficient determined for each of the sets of the target particle and each of the N particles.

Specifically, the updating module 28 calculates Equation (14).

$$f_i(t + \Delta t) = -[a_0 - a(t + \Delta t)]x_i(t + \Delta t) + c_0 \sum_{j=1}^{N} J_{i,j} x_j(t + \Delta t) \qquad (14)$$

Subsequently, at S112, the penalty calculation module 27 calculates the penalty component ($\partial P(t+\Delta t)/\partial x_i(t+\Delta t)$) of the target particle at the target time ($t+\Delta t$).

In the process of calculating the penalty component of the target particle, first, the penalty calculation module 27 calculates the partial penalty value ($P_k(t+\Delta t)$) at the target time ($t+\Delta t$), for each of the M constrained solutions.

Specifically, for the k-th constrained solution, the penalty calculation module 27 calculates Equation (15).

$$p_k(t + \Delta t) = \prod_{j=1}^{N} \left\{ \frac{z_{k,j}(x_j(t + \Delta t) + 1)}{2} + \frac{(1 - z_{k,j})(1 - x_j(t + \Delta t))}{2} \right\} \qquad (15)$$

Since the computation of Equation (15) yields the same value in all the processes from i=1 to i = N, the penalty calculation module 27 may commonly use the partial penalty value ($P_k(t+\Delta t)$) calculated at i=1 in the subsequent processes for i=2 to N.

Subsequently, the penalty calculation module 27 calculates the component (($\partial P_k(t+\Delta t))/\partial x_i(t+\Delta t)$) of the target particle in the partial penalty value ($P_k(t+\Delta t)$) at the target time ($t+\Delta t$), for each of the M constrained solutions.

Specifically, for the k-th constrained solution, the penalty calculation module 27 calculates Equation (16).

$$\frac{\partial p_k(t + \Delta t)}{\partial x_i(t + \Delta t)} = \frac{p_k(t + \Delta t)}{z_{k,i}(x_i(t + \Delta t) + 1) + (1 - z_{k,i})(x_i(t + \Delta t) - 1)} \qquad (16)$$

Subsequently, the penalty calculation module 27 adds the partial penalty component of the target particle at the target time ($t+\Delta t$) of each of the M constrained solutions, for the M constrained solutions, and multiplies the resulting sum by a predetermined penalty coefficient ($M_p$). Specifically, the penalty calculation module 27 calculates Equation (17).

$$\frac{\partial P(t + \Delta t)}{\partial x_i(t + \Delta t)} = M_p \sum_{k=1}^{M} \frac{\partial p_k(t + \Delta t)}{\partial x_i(t + \Delta t)} \qquad (17)$$

By performing the above computation, the penalty calculation module 27 can calculate the penalty component ($\partial P(t+\Delta t)/\partial x_i(t+\Delta t)$) of the target particle at the target time ($t+\Delta t$). The penalty calculation module 27 may perform the process of calculating the penalty component at S112 in parallel with the process of calculating the external force ($f_i(t+\Delta t)$) at S111.

Subsequently, at S113, the updating module 28 calculates the second variable ($y_i(t+\Delta t)$) of the target particle at the target time ($t+\Delta t$) by adding a value obtained by multiplying the sum of the external force ($f_i(t+\Delta t)$) and the penalty

component ($\partial P(t+\Delta t)/\partial x_i(t+\Delta t)$) of the target particle by the unit time ($\Delta t$), to the second variable ($y_i(t)$) of the target particle at the previous time (t). Specifically, the updating module 28 calculates Equation (18).

$$y_i(t + \Delta t) = y_i(t) + \left\{ f_i(t + \Delta t) + \frac{\partial P(t + \Delta t)}{\partial x_i(t + \Delta t)} \right\} \Delta t \qquad (18)$$

When the loop process between S110 and S114 is performed N times, the updating module 28 proceeds to S115. At S115, the updating module 28 updates the target time (t+$\Delta t$) by adding the unit time ($\Delta t$) to the previous time (t). At S116, the updating module 28 repeats the process from S104 to S115 until t exceeds the end time (T). When t becomes greater than the end time (T), the updating module 28 terminates this flow.

Then, the updating module 28 calculates, for each of the N particles, the value of the corresponding spin, in accordance with the sign of the first variable ($x_i(T)$) at the end time (t=T). For example, when the first variable ($x_i(T)$) at the end time (t=T) has a negative sign, the updating module 28 sets the corresponding spin to -1, and when positive, sets the corresponding spin to +1. The updating module 28 then outputs the calculated values of spins as a solution for the 0-1 optimization problem.

By performing the process in accordance with the flowchart illustrated in FIG. 6, the updating module 28 updates, for each of the N particles, the first variable ($x_i(t+\Delta t)$) and the second variable ($y_i(t+\Delta t)$) sequentially every unit time and updates the first variable ($x_i(t+\Delta t)$) and the second variable ($y_i(t+\Delta t)$) alternately, from the initial time (t=0) to the end time (t=T). By performing the process in accordance with the flowchart in FIG. 6, the updating module 28 calculates the second variable ($y_i(t+\Delta t)$) at the target time (t+$\Delta t$) after calculating the first variable ($x_i(t+\Delta t)$) at the target time (t+$\Delta t$), every unit time. In this way, the updating module 28 can calculate N first variables ($x_i(t)$ to $x_N(t)$) and N second variables ($y_i(t)$ to $y_N(t)$) at the end time (t=T) by performing computation in accordance with the improved algorithm using the symplectic Euler method.

FIG. 7 is a diagram illustrating a second example of the process of the calculation device 10. The calculation device 10 illustrated in FIG. 1, FIG. 3, and FIG. 5 may perform the process, for example, according to the flow illustrated in FIG. 7 in the solution calculation process. In the flowchart in FIG. 7, the step of the same process as the process in the flowchart illustrated in FIG. 6 is denoted by the same step number.

First of all, at S101 and S102, the control module 30 performs a process similar to that in the first example in FIG. 6. Subsequently, the updating module 28 performs the loop process between S103 and S116, in the same manner as in the first example in FIG. 6. In the process in FIG. 7, in one loop process, the updating module 28 calculates N second variables ($y_1(t+\Delta t)$ to $y_N(t+\Delta t)$) at the target time (t+$\Delta t$) on the basis of N first variables ($x_i(t)$ to $x_N(t)$) at the previous time (t) and the penalty component ($\partial P(t)/\partial x_i(t)$) of the target particle at the previous time (t). In one loop process, the updating module 28 calculates N first variables ($x_1(t+\Delta t)$ to $x_N(t+\Delta t)$) at the target time (t+$\Delta t$) on the basis of N second variables ($y_1(t+\Delta t)$ to $y_N(t+\Delta t)$) at the target time (t+$\Delta t$).

Subsequently, the updating module 28 repeats the loop process between S121 and S125 while incrementing i by one from i=1 to i=N. In the loop process between S121 and S125, the updating module 28 performs the process for the i-th particle in N particles as a target particle.

At S122, the updating module 28 calculates the external force ($f_i(t)$) on the basis of the first variable ($x_i(t)$ to $x_N(t)$) at the previous time (t) for each of the N particles and an interaction coefficient determined for each of the sets of the target particle and each of the N particles.

Specifically, the updating module 28 calculates Equation (19).

$$f_i(t) = -[a_0 - a(t)] x_i(t) + c_0 \sum_{j=1}^{N} J_{i,j} x_j(t) \qquad (19)$$

Subsequently, at S123, the penalty calculation module 27 calculates the penalty component ($\partial P(t+\Delta t)/\partial x_i(t)$) of the target particle at the previous time (t).

In the process of calculating the penalty component, first, the penalty calculation module 27 calculates the partial penalty value ($P_k(t)$) at the previous time (t) for each of the M constrained solutions.

Specifically, for the k-th constrained solution, the penalty calculation module 27 calculates Equation (20).

$$p_k(t) = \prod_{j=1}^{N} \left\{ \frac{z_{k,j}(x_j(t) + 1)}{2} + \frac{(1 - z_{k,j})(1 - x_j(t))}{2} \right\} \tag{20}$$

The computation of Equation (20) yields the same value in all the processes from i=1 to i=N. Therefore, the penalty calculation module 27 may commonly use the partial penalty value ($P_k(t)$) calculated at i=1 in the subsequent processes for i=2 to N.

Subsequently, the penalty calculation module 27 calculates the component (($\partial Pk(t))/\partial x_i(t)$) of the target particle in the partial penalty value ($P_k(t)$) at the previous time (t), for each of the M constrained solutions.

Specifically, for the k-th constrained solution, the penalty calculation module 27 calculates Equation (21).

$$\frac{\partial p_k(t)}{\partial x_i(t)} = \frac{p_k(t)}{z_{k,i}(x_i(t) + 1) + (1 - z_{k,i})(x_i(t) - 1)} \tag{21}$$

Subsequently, the penalty calculation module 27 adds the partial penalty component of the target particle at the previous time (t) of each of the M constrained solutions, for the M constrained solutions, and multiplies the resulting sum by a predetermined penalty coefficient ($M_p$). Specifically, the penalty calculation module 27 calculates Equation (22).

$$\frac{\partial P(t)}{\partial x_i(t)} = M_p \sum_{k=1}^{M} \frac{\partial p_k(t)}{\partial x_i(t)} \tag{22}$$

By performing the above computation, the penalty calculation module 27 can calculate the penalty component ($\partial P(t)/\partial x_i(t)$) of the target particle at the previous time (t). The penalty calculation module 27 may perform the process of calculating the penalty component at S123 in parallel with the process of calculating the external force ($f_i(t)$) at S122.

Subsequently, at S124, the updating module 28 calculates the second variable ($y_i(t+\Delta t)$) of the target particle at the target time (t+$\Delta t$) by adding a value obtained by multiplying the sum of the external force (fi(t)) and the penalty component ($\partial P(t)/\partial x_i(t)$) of the target particle by the unit time ($\Delta t$), to the second variable ($y_i(t)$) of the target particle at the previous time (t). Specifically, the updating module 28 calculates Equation (23).

$$y_i(t + \Delta t) = y_i(t) + \left\{ f_i(t) + \frac{\partial P(t)}{\partial x_i(t)} \right\} \Delta t \tag{23}$$

When the loop process between S121 and S125 is performed N times, the updating module 28 proceeds to S126.

Subsequently, the updating module 28 repeats the loop process between S126 and S129 while incrementing i by one from i=1 to i=N. In the loop process between S126 and S129, the updating module 28 performs the process for the i-th particle in N particles as a target particle.

At S127, the updating module 28 calculates the first variable ($x_i(t+\Delta t)$) of the target particle at the target time (t+$\Delta t$) by adding a value obtained by multiplying the second variable ($y_i(t+\Delta t)$) of the target particle at the target time (t+$\Delta t$) by the predetermined coefficient (D) and the unit time ($\Delta t$), to the first variable ($x_i(t)$) of the target particle at the previous time (t). Specifically, the updating module 28 calculates Equation (24).

$$x_i(t + \Delta t) = x_i(t) + D y_i(t + \Delta t) \Delta t \tag{24}$$

Subsequently, at S106, the updating module 28 performs a process similar to that in the first example illustrated in FIG. 6. If the absolute value ($|x_i(t+\Delta t)|$) of the first variable of the target particle at the target time (t+$\Delta t$) is equal to or smaller than the second value, the updating module 28 proceeds to S129 (No at S106). If the absolute value ($|x_i(t+\Delta t)|$) of the first variable of the target particle at the target time (t+$\Delta t$) is greater than the second value, the updating module 28 proceeds to S107.

Subsequently, at S107 and S108, the updating module 28 performs a process similar to that in the first example illustrated in FIG. 6. When S108 is finished, the updating module 28 proceeds to S129.

When the loop process between S126 and S129 is performed N times, the updating module 28 proceeds to S115. At S115, the updating module 28 performs a process similar to that in the first example illustrated in FIG. 6. At S116, the updating module 28 repeats the process from S104 to S115 until t exceeds the end time (T). When t becomes greater than the end time (T), the updating module 28 terminates this flow. Moreover, the updating module 28 calculates, for each of the N particles, the value of the corresponding spin, in accordance with the sign of the first variable ($x_i(T)$) at the end time (t=T), and outputs the calculated values of spins as a solution for the 0-1 optimization problem.

By performing the process in accordance with the flowchart illustrated in FIG. 7, the updating module 28 updates, for each of the N particles, the first variable ($x_i(t+\Delta t)$) and the second variable ($y_i(t+\Delta t)$) sequentially every unit time and updates the first variable ($x_i(t+\Delta t)$) and the second variable ($y_i(t+\Delta t)$) alternately, from the initial time (t=0) to the end time (t=T). By performing the process in accordance with the flowchart in FIG. 7, the updating module 28 calculates the first variable ($x_i(t+\Delta t)$) at the target time ($t+\Delta t$) after calculating the second variable ($y_i(t+\Delta t)$) at the target time ($t+\Delta t$), every unit time. In this way, the updating module 28 can calculate N first variables ($x_i(t)$ to $x_N(t)$) and N second variables ($y_i(t)$ to $y_N(t)$) at the end time (t=T) by performing computation in accordance with the improved algorithm using the symplectic Euler method.

Penalty Calculation Module 27

A configuration example of the penalty calculation module 27 configured with circuitry will now be described.

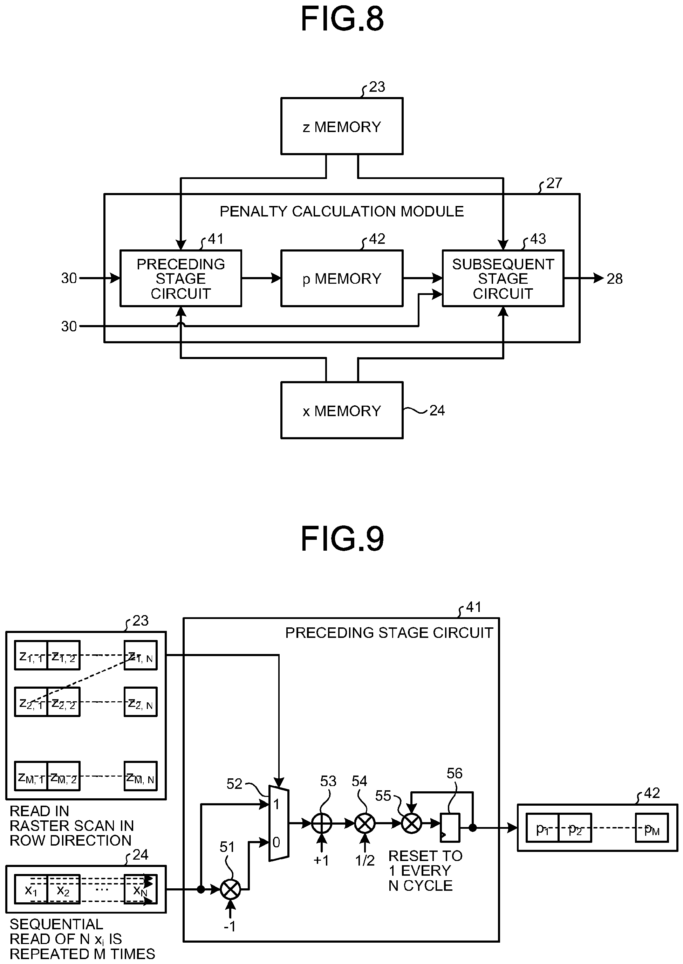

FIG. 8 is a diagram illustrating a circuit configuration of the penalty calculation module 27 with the z memory 23 and the x memory 24. The penalty calculation module 27 has a preceding stage circuit 41, a p memory 42, and a subsequent stage circuit 43. The preceding stage circuit 41 calculates M partial penalty values for M constrained solutions, every unit time. For example, the preceding stage circuit 41 calculates the k-th partial penalty value $p_k$ by computing Equation (25).

$$p_k = \prod_{j=1}^{N} \left\{ \frac{z_{k,j}(x_j + 1)}{2} + \frac{(1 - z_{k,j})(1 - x_j)}{2} \right\} \tag{25}$$

The p memory 42 stores M partial penalty values calculated by the preceding stage circuit 41. The M partial penalty values stored in the p memory 42 are updated every unit time.

The subsequent stage circuit 43 calculates, for each of the N particles, the penalty component of the target particle every unit time. For example, the subsequent stage circuit 43 calculates the penalty component $\partial P/\partial x_i$ of the i-th particle in N particles by computing Equations (26) and (27). The subsequent stage circuit 43 then outputs, for each of the N particles, the penalty component of the target particle to the updating module 28, every unit time.

$$\frac{\partial p_k}{\partial x_i} = \frac{p_k}{z_{k,i}(x_i + 1) + (1 - z_{k,i})(x_i - 1)} \tag{26}$$

$$\frac{\partial P}{\partial x_i} = M_p \sum_{k=1}^{M} \frac{\partial p_k}{\partial x_i} \tag{27}$$

FIG. 9 is a diagram illustrating a first configuration example of the preceding stage circuit 41 with the z memory 23, the x memory 24, and the p memory 42. The preceding stage circuit 41 according to the first configuration example includes a first multiplier circuit 51, a first selector 52, a first adder circuit 53, a second multiplier circuit 54, a third multiplier circuit 55, and a first holding circuit 56.

The preceding stage circuit 41 sequentially reads M×N constrained values included in M constrained solutions stored in the z memory 23, one by one for each cycle in a raster scan in the row direction. More specifically, first, the preceding stage circuit 41 sequentially reads N constrained values included in the first constrained solution in the M constrained solutions, from the first to the N-th, one by one for each cycle. Subsequently, the preceding stage circuit 41 sequentially reads N constrained values included in the second constrained solution in the M constrained solutions, from the first to the N-th, one by one for each cycle. The preceding stage circuit 41 thereafter sequentially reads N constrained values included in each of the third to the M-th constrained solutions, from the first to the N-th, one by one for each cycle.

In parallel with reading the constrained values from the z memory 23, the preceding stage circuit 41 repeats the process of sequentially reading N first variables stored in the x memory 24 from the 1st first variable ($x_1$) to the N-th first variable ($x_N$) one by one for each cycle, M times. In this case, the preceding stage circuit 41 synchronously reads N constrained values included in each of the M constrained solutions and N first variables. That is, the preceding stage circuit 41 synchronously reads the i-th constrained value ($zk,i$) included in each constrained solution and the i-th first variable ($x_i$).

The first multiplier circuit 51 outputs a value ($-x_i$) obtained by multiplying the first variable ($x_i$) read from the x memory 24 by -1, for each cycle.

The first selector 52 acquires the constrained value ($z_{k,i}$) read from the z memory 23, for each cycle. When the acquired constrained value ($z_{k,i}$) is 1, the first selector 52 selects and outputs the first variable ($x_i$) read from the x memory 24. When the acquired constrained value ($z_{k,i}$) is 0, the first selector 52 selects and outputs the value ($-x_i$) output from the first multiplier circuit 51.

The first adder circuit 53 outputs a value obtained by adding 1 to the value output from the first selector 52, for each cycle. The second multiplier circuit 54 outputs a value obtained by multiplying the value output from the first adder circuit 53 by 1/2. The third multiplier circuit 55 multiplies the value held in the first holding circuit 56 one cycle earlier by the value output from the second multiplier circuit 54, and overwrites the multiplication result in the first holding circuit 56, for each cycle. The first holding circuit 56 resets the held value to 1 every N cycles.

The preceding stage circuit 41 then writes, as the partial penalty value ($p_k$), the value held in the first holding circuit 56 after the process for the N-th constrained value ($z_{k,N}$) and the N-th first variable ($x_N$) is finished, into the p memory 42. The preceding stage circuit 41 repeats the process of writing the partial penalty value ($p_k$) every N cycles, M times.

Such a preceding stage circuit 41 according to the first configuration example can perform the computation in Equation (25) in N cycles. In this configuration, the preceding stage circuit 41 according to the first configuration example can write M partial penalty values ($p_k$) for M constrained solutions into the p memory 42 after finishing NxM cycles.

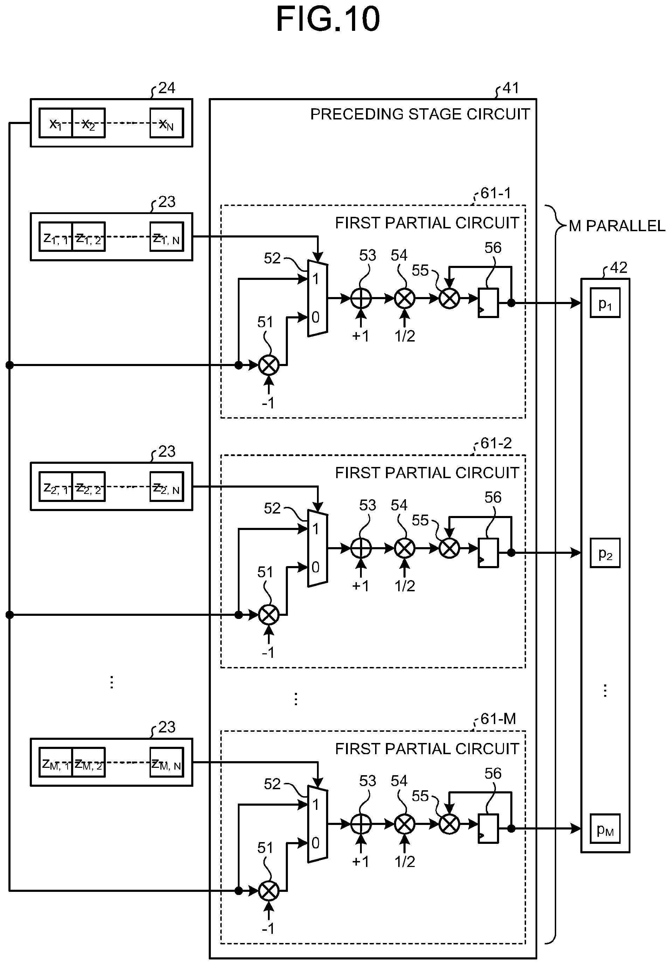

FIG. 10 is a diagram illustrating a second configuration example of the preceding stage circuit 41 with the z memory 23, the x memory 24, and the p memory 42.

The preceding stage circuit 41 according to the second configuration example has M first partial circuits 61-1 to 61-M. Each of the M first partial circuits 61-1 to 61-M has the same configuration as the configuration of the preceding stage circuit 41 according to the first configuration example illustrated in FIG. 9 and includes the first multiplier circuit 51, the first selector 52, the first adder circuit 53, the second multiplier circuit 54, the third multiplier circuit 55, and the first holding circuit 56.

The preceding stage circuit 41 according to the second configuration example sequentially reads M×N constrained values included in M constrained solutions stored in the z memory 23, in M parallel, for each cycle. In other words, the preceding stage circuit 41 reads M constrained values simultaneously in one cycle. More specifically, the preceding stage circuit 41 reads M constrained values included in the first in M constrained solutions, in one cycle. Subsequently, the preceding stage circuit 41 reads M constrained values included in the second in M constrained solutions, in one cycle. The preceding stage circuit 41 thereafter reads M constrained values, from the third to the N-th, for each cycle.

In parallel with reading the constrained values from the z memory 23, the preceding stage circuit 41 performs the process of reading N first variables stored in the x memory 24 from the 1st first variable ($x_1$) to the N-th first variable ($x_N$) one by one for each cycle, once. In this case, the preceding stage circuit 41 synchronously reads N constrained values included in each of the M constrained solutions and N first variables. That is, the preceding stage circuit 41 synchronously reads the i-th constrained value ($z_{1,i}$ to $z_{M,i}$) and the i-th first variable ($x_i$).

M first partial circuits 61-1 to 61-M perform computations in parallel. M first partial circuits 61-1 to 61-M correspond to M constrained solutions. Each of the M first partial circuits 61-1 to 61-M receives N first variables ($x_i$) read from the x memory 24 and N constrained values ($z_{k,i}$) included in the corresponding constrained solution in M constrained solutions read from the z memory 23.

Each of the M first partial circuits 61-1 to 61-M calculates the penalty value ($p_k$) by performing the computation in Equation (25) by performing the N-cycle process. The M first partial circuits 61-1 to 61-M then write M partial penalty values ($p_k$) obtained by performing the computations in parallel, into the p memory 42 in parallel.

Such a preceding stage circuit 41 according to the second configuration example can write M partial penalty values ($p_k$) for M constrained solutions into the p memory 42 after finishing N cycles.

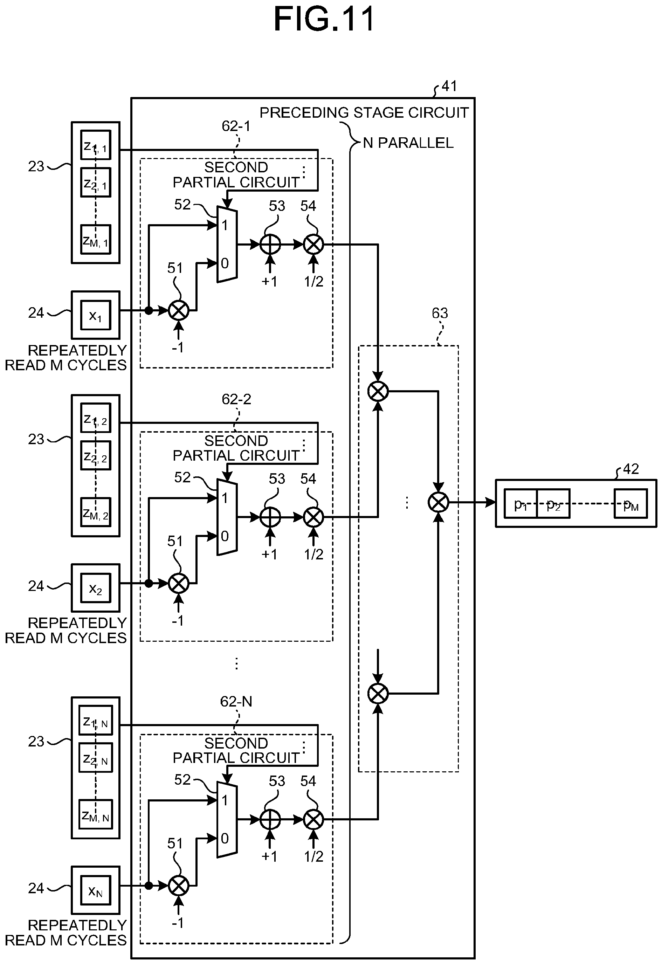

FIG. 11 is a diagram illustrating a third configuration example of the preceding stage circuit 41 with the z memory 23, the x memory 24, and the p memory 42.

The preceding stage circuit 41 according to the third configuration example has N second partial circuits 62-1 to 62-N and a total multiplier circuit 63. Each of the N second partial circuits 62-1 to 62-N has the same configuration as the configuration of the preceding stage circuit 41 according to the first configuration example illustrated in FIG. 9 except for the third multiplier circuit 55 and the first holding circuit 56, and includes the first multiplier circuit 51, the first selector 52, the first adder circuit 53, and the second multiplier circuit 54.

The preceding stage circuit 41 according to the third configuration example sequentially reads M×N constrained values included in M constrained solutions stored in the z memory 23, in N parallel, for each cycle. More specifically, first, the preceding stage circuit 41 reads N constrained values included in the first constrained solution in M constrained solutions in parallel in one cycle. Subsequently, the preceding stage circuit 41 reads N constrained values included in the second constrained solution in the M constrained solutions in parallel in one cycle. The preceding stage circuit 41 thereafter reads N constrained values included in each of the third to the M-th constrained solutions in parallel, for each cycle.

In parallel with reading the constrained values from the z memory 23, the preceding stage circuit 41 repeats the process of reading N first variables stored in the x memory 24 in parallel, M cycles.

The N second partial circuits 62-1 to 62-N perform computations in parallel. The N second partial circuits 62-1 to 62-N correspond to N particles. Each of the N second partial circuits 62-1 to 62-N receives a corresponding first variable in the N first variables ($x_i$) read from the x memory 24 and the constrained value of the corresponding particle included in each of the N constrained solutions read from the z memory 23.

Each of the N second partial circuits 62-1 to 62-N performs computation of the expression inside the parentheses of $\Pi$ in Equation (25) for the corresponding particle by performing the one-cycle process. Each of the N second partial circuits 62-1 to 62-N therefore performs computation of the expression inside the parentheses of $\Pi$ in Equation (25) for the corresponding particle, for each of the M constrained solutions, by performing the M-cycle process.

The total multiplier circuit 63 multiplies the computation results of the N second partial circuits 62-1 to 62-N for each cycle. In other words, the total multiplier circuit 63 performs the computation of $\Pi$ in Equation (25) by performing the one-cycle process. The total multiplier circuit 63 therefore calculates M penalty values ($p_k$) by performing the computation of $\Pi$ in Equation (25) for each of the M constrained solutions by performing the M-cycle process. The total multiplier circuit 63 sequentially writes M partial penalty values ($p_k$) obtained by sequentially performing multiplication, into the p memory 42. Each of the N second partial circuits 62-1 to 62-N need not have the second multiplier circuit 54. In this configuration, the preceding stage circuit 41 has the second multiplier circuit 54 that multiplies the computation result of the total multiplier circuit 63 by 1/2 and writes the multiplication result into the p memory 42, at the stage subsequent to the total multiplier circuit 63.

Such a preceding stage circuit 41 according to the third configuration example can write M partial penalty values ($p_k$) for M constrained solutions into the p memory 42 after finishing M cycles. The preceding stage circuit 41 may be a combination of the second example and the third example and configured to read the constrained values in M×N parallel and calculate M partial penalty values ($p_k$) in one cycle.

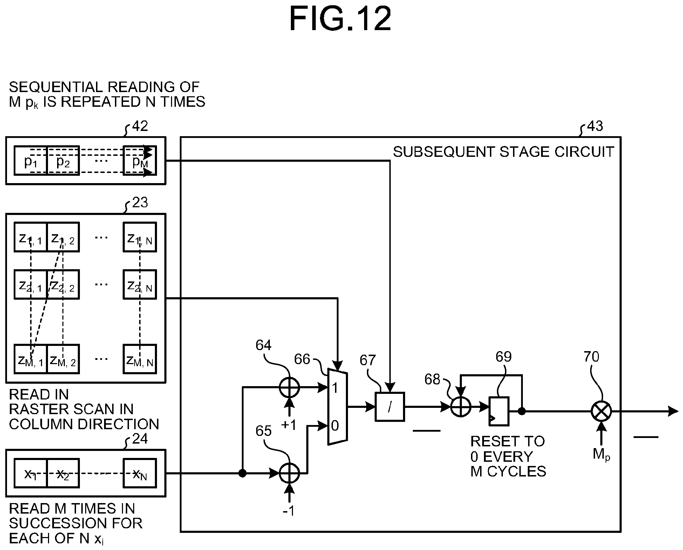

FIG. 12 is a diagram illustrating a first configuration example of the subsequent stage circuit 43 with the z memory 23, the x memory 24, and the p memory 42. The subsequent stage circuit 43 according to the first configuration example includes a second adder circuit 64, a third adder circuit 65, a second selector 66, a divider circuit 67, a fourth adder circuit 68, a second holding circuit 69, and a coefficient multiplier circuit 70.

The subsequent stage circuit 43 sequentially reads M×N constrained values included in M constrained solutions stored in the z memory 23, one by one for each cycle in a raster scan in the column direction. More specifically, the subsequent stage circuit 43 sequentially reads M constrained values included in the first of each of the M constrained solutions, from the first constrained solution for the M-th constrained solution, one by one for each cycle. Subsequently, the subsequent stage circuit 43 sequentially reads M constrained values included in the second of each of the M constrained solutions, from the first constrained solution for the M-th constrained solution, one by one for each cycle. The subsequent stage circuit 43 thereafter sequentially reads M constrained values included in the third to M constrained values included in the N-th of each of the M constrained solutions, one by one.

In parallel with reading the constrained values from the z memory 23, the subsequent stage circuit 43 reads each of the N first variables stored in the x memory 24, in M cycles in succession. Specifically, the subsequent stage circuit 43 reads the 1st first variable in N first variables, in M cycles in succession. Subsequently, the subsequent stage circuit 43 reads the second first variable in the N first variables, in M cycles in succession. The subsequent stage circuit 43 thereafter repeats the process of reading each of the third first variable to the N-th first variable, in M cycles in succession.

In parallel with reading the constrained values from the z memory 23, the subsequent stage circuit 43 repeats the process of sequentially reading M partial penalty values stored in the p memory 42, from the first partial penalty value ($p_1$) to the M-th partial penalty value ($p_M$), one by one for each cycle, N times. In this case, the subsequent stage circuit 43 synchronously reads M constrained values included in the first one of the M constrained solutions, and M partial penalty values. That is, the subsequent stage circuit 43 synchronously reads the k-th constrained value ($z_{k,i}$) and the k-th partial penalty value ($p_k$).

The second adder circuit 64 acquires the first variable ($x_i$) read from the x memory 24 and outputs a value ($xi+1$) obtained by adding 1, for each cycle. The third adder circuit 65 outputs a value ($xi-1$) obtained by adding -1 to the value output from the second adder circuit 64.

The second selector 66 acquires the constrained value ($z_{k,i}$) read from the z memory 23, for each cycle. When the acquired constrained value (zk,i) is 1, the second selector 66 selects and outputs the value ($x_i+1$) output from the second adder circuit 64. When the acquired constrained value ($z_{k,i}$) is 0, the second selector 66 selects and outputs the value ($x_i-1$) output from the third adder circuit 65.

The divider circuit 67 acquires the partial penalty value ($p_k$) read from the p memory 42 and divides the acquired partial penalty value ($p_k$) by the value output from the second selector 66, for each cycle.

The fourth adder circuit 68 adds the value held in the second holding circuit 69 one cycle earlier to the value output from the divider circuit 67, and overwrites the addition result in the second holding circuit 69, for each cycle. The second holding circuit 69 resets the held value to 0, every M cycles. The coefficient multiplier circuit 70 multiplies the value held in the second holding circuit 69 by the penalty coefficient ($M_p$) and outputs the multiplication result.

The subsequent stage circuit 43 then outputs, for each of the N particles, the value output from the coefficient multiplier circuit 70 after finishing the process for the N-th constrained value ($z_{k,N}$), as the penalty component ($\partial p_k/\partial x_i$) of the corresponding particle, to the updating module 28. The subsequent stage circuit 43 repeats the process of outputting the penalty component ($\partial p_k/\partial x_i$) of the corresponding particle every M cycles, N times.

Such a subsequent stage circuit 43 according to the first configuration example can perform the computations in Equations (26) and (27) for all of the N particles in M×N cycles. In this configuration, the subsequent stage circuit 43 according to the first configuration example can output the penalty component ($\partial p_k/\partial x_i$) for each of the N particles after finishing M×N cycles.

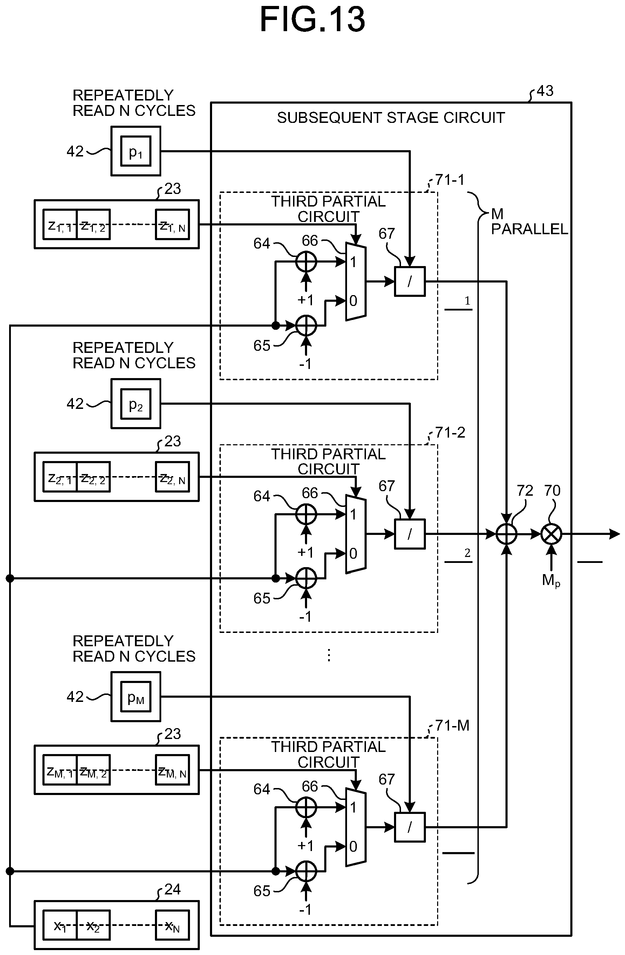

FIG. 13 is a diagram illustrating a second configuration example of the subsequent stage circuit 43 with the z memory 23, the x memory 24, and the p memory 42.

The subsequent stage circuit 43 according to the second configuration example has M third partial circuits 71-1 to 71-M, a total adder circuit 72, and a coefficient multiplier circuit 70. Each of the M third partial circuits 71-1 to 71-M has the same configuration as the configuration of the subsequent stage circuit 43 according to the first configuration example illustrated in FIG. 12, except for the fourth adder circuit 68, the second holding circuit 69, and the coefficient multiplier circuit 70, and includes the second adder circuit 64, the third adder circuit 65, the second selector 66, and the divider circuit 67.

The subsequent stage circuit 43 according to the third configuration example sequentially reads M×N constrained values included in M constrained solutions stored in the z memory 23, in M parallel, for each cycle. That is, the subsequent stage circuit 43 reads M constrained values simultaneously, in one cycle. More specifically, the subsequent stage circuit 43 reads M constrained values included in the first one of the M constrained solutions, in one cycle. Subsequently, the subsequent stage circuit 43 reads M constrained values included in the second one of the M constrained solutions, in one cycle. The subsequent stage circuit 43 thereafter reads M constrained values from the third to the N-th ones, for each cycle.

In parallel with reading the constrained values from the z memory 23, the subsequent stage circuit 43 performs the process of reading N first variables stored in the x memory 24 from the 1st first variable ($x_1$) to the N-th first variable ($x_N$) one by one for each cycle, once. In this case, the subsequent stage circuit 43 synchronously reads N constrained values included in each of the M constrained solutions and N first variables. That is, the subsequent stage circuit 43 synchronously reads the i-th constrained value (zi,i to $z_{M,i}$) and the i-th first variable ($x_i$).

In parallel with reading the constrained values from the z memory 23, the subsequent stage circuit 43 repeats the process of reading M partial penalty values stored in the p memory 42 in parallel, N cycles.

The M third partial circuits 71-1 to 71-M correspond to M constrained solutions. Each of the M third partial circuits 71-1 to 71-M sequentially receives N first variables ($x_i$) read from the x memory 24, for each cycle. Each of the M third partial circuits 71-1 to 71-M sequentially receives N constrained values included in the corresponding constrained solution ($z_{k,i}$) in M constrained solutions read from the z memory 23, for each cycle. Each of the M third partial circuits 71-1 to 71-M receives the corresponding partial penalty value in M partial penalty values, for each cycle.

Each of the M third partial circuits 71-1 to 71-M performs the computation of Equation (26) by performing the one-cycle process. The M third partial circuits 71-1 to 71-M perform computations in parallel. That is, each of the M third partial circuits 71-1 to 71-M sequentially performs the computation of Equation (26) for each of the N particles.

The total adder circuit 72 performs the computation of Σ in Equation (26) by adding the computation results of the M third partial circuits 71-1 to 71-M, for each cycle. That is, the total adder circuit 72 performs the computation of Σ in Equation (26) for each of the N particles.

The coefficient multiplier circuit 70 performs the computation of Equation (26) by multiplying the value output from the total adder circuit 72 by the penalty coefficient ($M_p$), for each cycle. That is, the coefficient multiplier circuit 70 performs multiplication of the penalty coefficient in Equation (26), for each of the N particles.

Such a subsequent stage circuit 43 according to the second configuration example can output the penalty component ($\partial p_k/\partial x_i$) for each of the N particles after finishing N cycles.

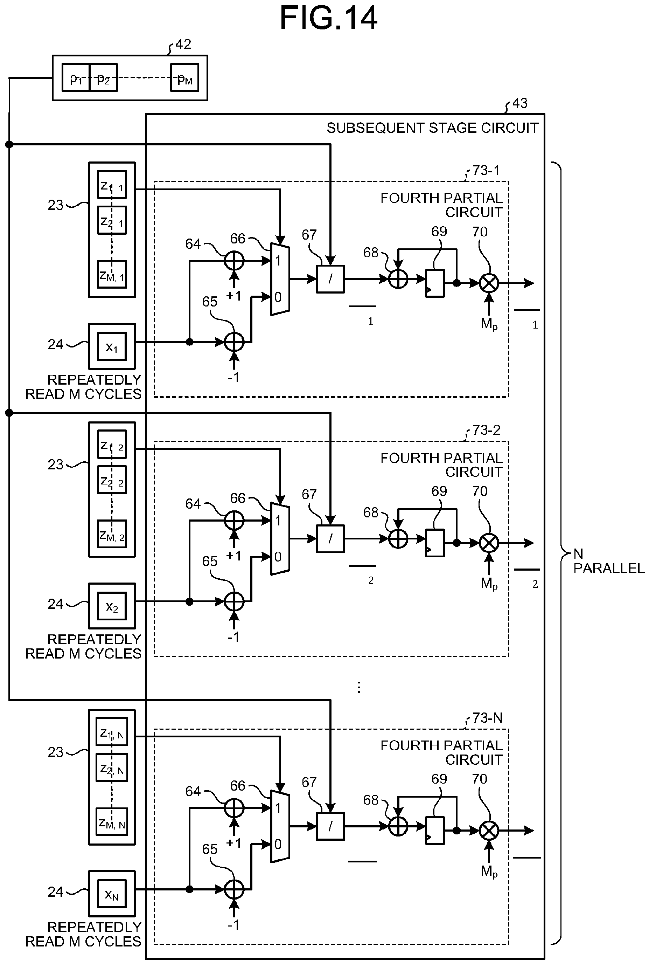

FIG. 14 is a diagram illustrating a third configuration example of the subsequent stage circuit 43 with the z memory 23, the x memory 24, and the p memory 42.

The subsequent stage circuit 43 according to the third configuration example has N fourth partial circuits 73-1 to 73-N. Each of the N fourth partial circuits 73-1 to 73-N has

the same configuration as the configuration of the subsequent stage circuit 43 according to the first configuration example illustrated in FIG. 12, and includes the second adder circuit 64, the third adder circuit 65, the second selector 66, the divider circuit 67, the fourth adder circuit 68, the second holding circuit 69, and the coefficient multiplier circuit 70.

The subsequent stage circuit 43 according to the third configuration example sequentially reads M×N constrained values included in M constrained solutions stored in the z memory 23, in N parallel, for each cycle. More specifically, first, the subsequent stage circuit 43 reads N constrained values included in the first constrained solution in M constrained solutions in parallel in one cycle. Subsequently, the subsequent stage circuit 43 reads N constrained values included in the second constrained solution in the M constrained solutions in parallel in one cycle. The subsequent stage circuit 43 thereafter reads N constrained values included in each of the third to M-th constrained solutions in parallel for each cycle.

In parallel with reading the constrained values from the z memory 23, the subsequent stage circuit 43 repeats the process of reading N first variables stored in the x memory 24 in parallel, M cycles.

In parallel with reading the constrained values from the z memory 23, the subsequent stage circuit 43 performs the process of reading M partial penalty values stored in the p memory 42 from the first partial penalty value (pi) to the M-th partial penalty value ($p_N$) one by one for each cycle, once. In this case, the subsequent stage circuit 43 synchronously reads N constrained values included in each of the M constrained solutions, and M partial penalty values. That is, the subsequent stage circuit 43 synchronously reads the k-th constrained value ($z_{k,i}$) and the k-th partial penalty value ($p_k$).

The N fourth partial circuits 73-1 to 73-N perform computations in parallel. The N fourth partial circuits 73-1 to 73 to N correspond to N particles. Each of the N fourth partial circuits 73-1 to 73-N receives N first variables ($x_i$) read from the x memory 24 and N constrained values ($z_{k,i}$) included in the corresponding constrained solution in M constrained solutions read from the z memory 23.

Each of the N fourth partial circuits 73-1 to 73-N calculates the penalty component ($\partial p_k/\partial x_i$) for the corresponding particle by performing the computations of Equations (26) and (27) by performing the N-cycle process. The N fourth partial circuits 73-1 to 73-N then output the penalty components ($\partial p_k/\partial x_i$) for N particles obtained by performing the computations in parallel, in parallel.

Such a subsequent stage circuit 43 according to the third configuration example can output the penalty component ($\partial p_k/\partial x_i$) for each of the N corresponding particles after finishing N cycles.

The subsequent stage circuit 43 may be a combination of the second example and the third example and configured to read constrained values in M×N parallel and calculate the penalty component ($\partial p_k/\partial x_i$) for each of the N particles in one cycle.

Information Processing System 100

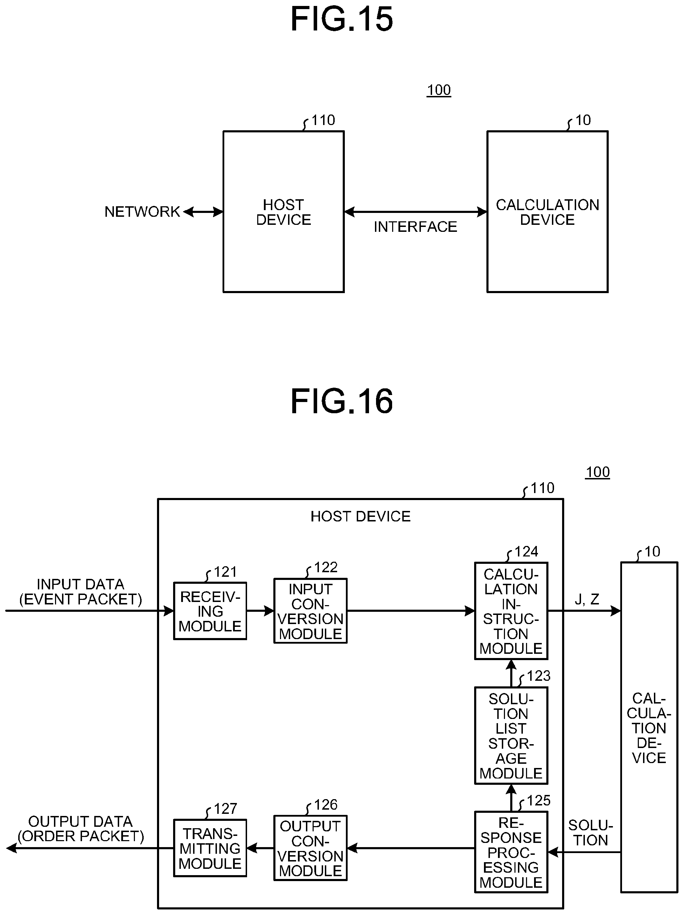

FIG. 15 is a diagram illustrating a configuration of an information processing system 100. The information processing system 100 includes the calculation device 10 and a host device 110.

The information processing system 100 uses the calculation device 10 to perform information processing. For example, the information processing system 100 may be an arbitrage device for performing foreign exchange transactions. For example, the information processing system 100 uses the calculation device 10 to search for a foreign exchange arbitrage path and perform foreign exchange transactions in accordance with the found path. The information processing system 100 may be a device that transacts any targets in addition to foreign exchange. The information processing system 100 is not limited to a transaction system and may be any system that solves combinatorial optimization problems and performs information processing. For example, the information processing system 100 may be a control system for robots and the like.

The host device 110 is an information processing device such as a computer. The host device 110 is implemented by a CPU, a microprocessor, an ASIC, or electronic circuitry including these circuits etc.

The host device 110 is connected to the calculation device 10 via an interface such as a bus. When the host device 110 is an information processing device such as a computer, the calculation device 10 may be incorporated as an internal resource of the information processing device.

The host device 110 transmits and receives information to and from external devices via a network. For example, when the information processing system 100 is an arbitrage device, the host device 110 transmits and receives information to and from a market server as an external device. When the information processing system 100 is a control system, the information processing system 100 transmits and receives information to and from a control target device as an external device.

FIG. 16 is a diagram illustrating a configuration of the host device 110 according to a first example with the calculation device 10. The host device 110 includes a receiving module 121, an input conversion module 122, a solution list storage module 123, a calculation instruction module 124, a response processing module 125, an output conversion module 126, and a transmitting module 127.

The receiving module 121 receives input data from an external device via the network. For example, when the information processing system 100 is an arbitrage device, the receiving module 121 receives an event packet including a pair of currencies (a pair of a currency and a currency), a selling price, and a buying price from a market server.

The input conversion module 122 generates a 0-1 optimization problem to be solved by the calculation device 10 in accordance with the input data received by the receiving module 121. That is, the input conversion module 122 generates an interaction matrix (J) in accordance with the input data.

The solution list storage module 123 stores a solution list including M constrained solutions. The solution list storage module 123 need not store constrained solutions before an execution instruction by the calculation instruction module 124.

When a 0-1 optimization problem is generated by the input conversion module 122, the calculation instruction module 124 transmits M constrained solutions stored in the solution list storage module 123 to the calculation device 10 to internally set the transmitted constrained solutions. When no constrained solutions are stored in the solution list storage module 123, the calculation instruction module 124 gives an instruction to the calculation device 10 to erase the internally set constrained solutions. Moreover, the calculation instruction module 124 applies the generated 0-1 optimization problem, that is, the interaction matrix (J), to the calculation device 10. The calculation instruction module 124 then gives an execution instruction to perform a calculation process multiple times.

The calculation device 10 repeats the calculation process in response to receiving an execution instruction from the calculation instruction module 124. The calculation device 10 returns the solution for the 0-1 optimization problem to the host device 110 every time it performs one calculation process.

The response processing module 125 acquires the solution for the 0-1 optimization problem from the calculation device 10. The response processing module 125 sends the acquired solution for the 0-1 optimization problem to the output conversion module 126. The response processing module 125 registers the acquired solution for the 0-1 optimization problem as one constrained solution in M constrained solutions in the solution list storage module 123.

The output conversion module 126 generates output data to be applied to an external device on the basis of the solution for the 0-1 optimization problem acquired by the response processing module 125. For example, when the information processing system 100 is an arbitrage device, the output conversion module 126 determines an exchange arbitrage path on the basis of the solution for the 0-1 optimization problem and determines, for example, whether a profit equal to or greater than a certain value can be obtained when arbitrage is executed on the determined path. When it is determined that a profit equal to or greater than a certain value can be obtained, the output conversion module 126 generates an order packet to execute arbitrage on the determined path.

The transmitting module 127 transmits the output data generated by the output conversion module 126 to an external device via the network. For example, when the information processing system 100 is an arbitrage device, the transmitting module 127 transmits an order packet to a market server.

Here, when some of the M constrained solutions stored in the solution list storage module 123 are updated by the response processing module 125, the calculation instruction module 124 applies the updated constrained solutions to the calculation device 10. The calculation instruction module 124 then gives an instruction to update the set M constrained solutions while continuing the calculation process without changing the 0-1 optimization problem.

The host device 110 can cause the calculation device 10 to calculate multiple solutions to one 0-1 optimization problem and can set the calculated solution as a new constrained solution in the calculation device 10 so that the same solutions are not calculated. With this configuration, the information processing system 100 can efficiently calculate multiple solutions to a 0-1 optimization problem with a small computational cost.

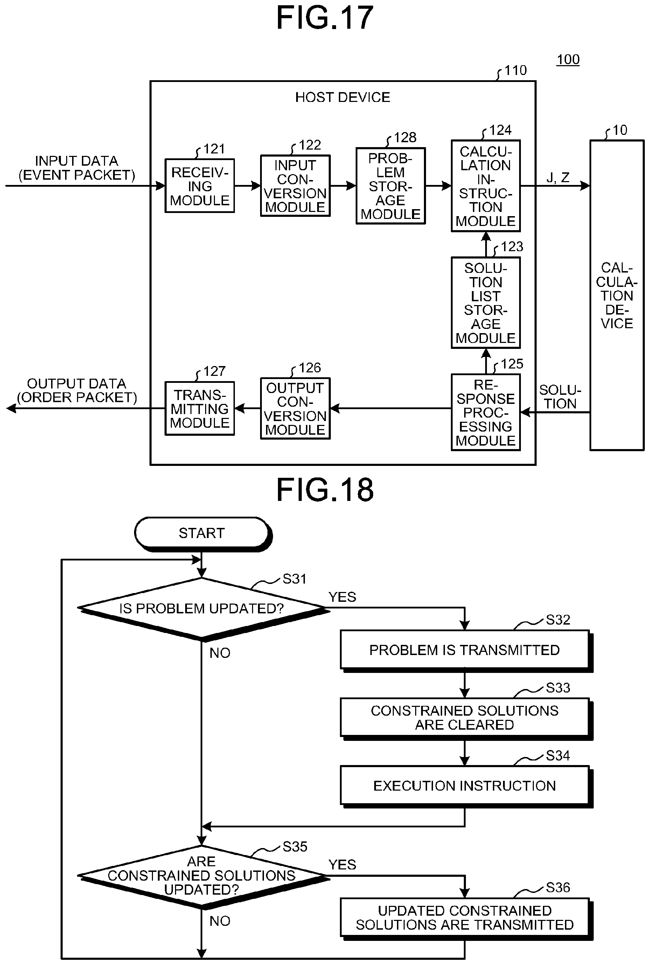

FIG. 17 is a diagram illustrating a configuration of the host device 110 according to a second example with the calculation device 10. The host device 110 according to the second example has substantially the same functions and configuration as those of the host device 110 according to the first example illustrated in FIG. 16, and the same components are denoted by the same reference signs and will not be further elaborated.

The host device 110 according to the second example further includes a problem storage module 128. The problem storage module 128 stores an interaction matrix (J) representing a 0-1 optimization problem.

In the second example, the receiving module 121 repeatedly receives input data from an external device periodically or irregularly. For example, when the information processing system 100 is an arbitrage device, the receiving module 121 repeatedly receives an event packet from a market server periodically or irregularly.

In the second example, the input conversion module 122 generates an interaction matrix (J) of a 0-1 optimization problem every time the receiving module 121 receives input data. The input conversion module 122 then stores the generated 0-1 optimization problem in the problem storage module 128. That is, the input conversion module 122 stores the generated interaction matrix (J) in the problem storage module 128.

In the second example, when the 0-1 optimization problem stored in the problem storage module 128 is updated, the calculation instruction module 124 causes the calculation device 10 to clear the internally set M constrained solutions.

Along with this, the calculation instruction module 124 transmits the updated 0-1 optimization problem to the calculation device 10 and gives an execution instruction to perform a calculation process multiple times.

FIG. 18 is a flowchart illustrating a process in the calculation instruction module 124 according to the second example. In the second example, the calculation instruction module 124 performs a process according to the flow illustrated in FIG. 18.

First of all, at S31, the calculation instruction module 124 determines whether the 0-1 optimization problem stored in the problem storage module 128 is updated. If the 0-1 optimization problem stored in the problem storage module 128 is not updated (No at S31), the calculation instruction module 124 proceeds to S35. If the 0-1 optimization problem stored in the problem storage module 128 is updated (Yes at S31), the calculation instruction module 124 proceeds to S32.

At S32, the calculation instruction module 124 transmits the updated 0-1 optimization problem to the calculation device 10. Subsequently, at S33, the calculation instruction module 124 causes the calculation device 10 to clear the internally set M constrained solutions. Subsequently, the calculation instruction module 124 gives a calculation device 10 an execution instruction to perform a calculation process multiple times. The calculation device 10 receiving such an instruction repeatedly performs a calculation process to calculate the solution for the updated 0-1 optimization problem. When S34 is finished, the calculation instruction module 124 proceeds to S35.

At S35, the calculation instruction module 124 determines whether M constrained solutions stored in the solution list storage module 123 are updated. If the M constrained solutions stored in the solution list storage module 123 are not updated (No at S35), the calculation instruction module 124 returns the process to S31 and repeats the process from S31. If M constrained solutions stored in the solution list storage module 123 are updated (Yes at S35), the calculation instruction module 124 proceeds to S36.

At S36, the calculation instruction module 124 transmits the updated constrained solutions to the calculation device 10. The calculation instruction module 124 then gives an instruction to the calculation device 10 to update the set M constrained solutions while continuing the calculation process without changing the problem. The calculation device 10 receiving such an instruction repeatedly performs a calculation process to calculate a solution without changing the 0-1 optimization problem. When S36 is finished, the calculation instruction module 124 returns the process to S31 to repeat the process from S31.

Such a host device 110 can cause the calculation device 10 to calculate multiple solutions to a first 0-1 optimization problem and then to calculate multiple solutions to a second 0-1 optimization problem. The host device 110 can then set the calculated solution as a new constrained solution in the calculation device 10 so that the same solutions are not calculated for each of the 0-1 optimization problems. With this configuration, the information processing system 100 can efficiently calculate multiple solutions for each of the 0-1 optimization problems with a small computational cost.

While certain embodiments have been described, these embodiments have been presented by way of example only, and are not intended to limit the scope of the inventions. Indeed, the novel embodiments described herein may be embodied in a variety of other forms; moreover, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A calculation device (10) for solving a 0-1 optimization problem in which a quadratic function containing N binary variables is an objective function, N being an integer equal to or greater than 2, the calculation device comprising:

   a setting module (26) configured to set M constrained solutions, M being an integer equal to or greater than 1;
   an updating module (28) configured to update, for each of virtual N particles, a first variable representing a position of a target particle and a second variable representing a momentum of the target particle sequentially and alternately every unit time from a start time to an end time; and
   an output module (29) configured to output a solution for the 0-1 optimization problem on the basis of the first variable of each of the N particles at the end time, wherein
   the N binary variables are 0 or 1,
   each of the M constrained solutions includes N constrained values,
   the N constrained values correspond to the N binary variables,
   each of the N constrained values is 0 or 1,
   the N particles correspond to the N binary variables,
   the updating module (28) is configured to, for each of the N particles in an updating process of the every unit time,

      update the first variable on the basis of the second variable,

change the first variable to a first value when the first variable is smaller than the first value, and change the first variable to a second value when the first variable is greater than the second value, the second value being greater than the first value, and
update the second variable on the basis of the first variable of each of the N particles and a penalty component of the target particle, and

the penalty component of the target particle

represents momentum per unit time for shifting the position of the target particle toward an opposite polarity, and
indicates a value that is greater as the first variable corresponding to the target particle is closer to the M constrained solutions.

2. The calculation device according to claim 1, wherein

the penalty component of the target particle indicates a value obtained by adding up a partial penalty component of the target particle of each of the M constrained solutions for the M constrained solutions, and multiplying a resulting sum by a predetermined penalty coefficient,
the partial penalty component of the target particle for a target constrained solution in the M constrained solutions is a component of the target particle in a partial penalty value for the target constrained solution,
the partial penalty value for the target constrained solution is greater as the target constrained solution is closer to the N first variables when the N first variables do not include an opposite polarity variable, and is 0 when the N first variables include the opposite polarity variable, and
the opposite polarity variable is a first variable that is the first value or the second value, a corresponding constrained value in the N constrained values included in the target constrained solution being 1 when the first variable is the first value, a corresponding constrained value in the N constrained values included in the target constrained solution being 0 when the first variable is the second value.

3. The calculation device according to claim 1 or 2, wherein the updating module is configured to, after updating the first variable, change the first variable to the first value when the first variable is smaller than a predetermined value, and change the first variable to the second value when the first variable is equal to or greater than the predetermined value, the predetermined value being greater than the first value and smaller than the second value.

4. The calculation device according to claim 2, wherein the updating module (28) is configured to, in the updating process of the every unit time, calculate the first variable at a target time for an i-th particle in the N particles by Equation (101) or (102),

$$x_i(t + \Delta t) = x_i(t) + D y_i(t)\Delta t \qquad (101)$$

$$x_i(t + \Delta t) = x_i(t) + D y_i(t + \Delta t)\Delta t \qquad (102)$$

where

i is any integer of 1 to N,
D is a constant,
$\Delta t$ is the unit time,
t is a previous time a unit time before the target time,
$t+\Delta t$ is the target time,
xi(t) is the first variable of the i-th particle at the previous time,
yi(t) is the second variable of the i-th particle at the previous time,
xi(t+$\Delta t$) is the first variable of the i-th particle at the target time, and
yi(t+$\Delta t$) is the second variable of the i-th particle at the target time.

5. The calculation device according to claim 4, wherein the updating module (28) is configured to, in the updating process of the every unit time, calculate the second variable at the target time for the i-th particle by Equation (103) or (104),

$$y_i(t + \Delta t) = y_i(t) + \left\{ f_i(t + \Delta t) + \frac{\partial P(t + \Delta t)}{\partial x_i(t + \Delta t)} \right\} \Delta t \qquad (103)$$

$$y_i(t + \Delta t) = y_i(t) + \left\{ f_i(t) + \frac{\partial P(t)}{\partial x_i(t)} \right\} \Delta t \qquad (104)$$

where
fi(t+Δt) is given by Equation (105), and fi(t) is given by Equation (106),

$$f_i(t + \Delta t) = -[a_0 - a(t + \Delta t)]x_i(t + \Delta t) + c_0 \sum_{j=1}^{N} J_{i,j} x_j(t + \Delta t) \qquad (105)$$

$$f_i(t) = -[a_0 - a(t)]x_i(t) + c_0 \sum_{j=1}^{N} J_{i,j} x_j(t) \qquad (106)$$

where

j is any integer of 1 to N,
Jij is a coupling coefficient at an i-th row and a j-th column included in a predetermined matrix including N×N coupling coefficients,
a0 is a coefficient,
c0 is a coefficient,
xj(t) is the first variable at the previous time for a j-th particle corresponding to a j-th binary variable in the N binary variables,
xj(t/Δt) is the first variable at the target time for the j-th particle,
p(t) is a predetermined function with t as a variable, increases as t increases, becomes 0 when t is the start time, and becomes 1 when t is the end time
a(t) is a predetermined function with t as a variable,
∂P(t)/∂xi(t) represents the penalty component corresponding to the i-th particle at the previous time, and
∂P(t+Δt)/∂xi(t+Δt) represents the penalty component corresponding to the i-th particle at the target time.

6. The calculation device according to claim 5, wherein, when the first value is -1 and the second value is 1, ∂P(t+Δt)/∂xi(t+Δt) is calculated by Equation (107),

$$\frac{\partial P(t + \Delta t)}{\partial x_i(t + \Delta t)} = M_p \sum_{k=1}^{M} \frac{\partial p_k(t + \Delta t)}{\partial x_i(t + \Delta t)} \qquad (107)$$

$$\frac{\partial p_k(t + \Delta t)}{\partial x_i(t + \Delta t)} = \frac{p_k(t + \Delta t)}{z_{k,i}(x_i(t + \Delta t) + 1) + (1 - z_{k,i})(x_i(t + \Delta t) - 1)}$$

$$p_k(t) = \prod_{j=1}^{N} \left\{ \frac{z_{k,j}(x_j(t + \Delta t) + 1)}{2} + \frac{(1 - z_{k,j})(1 - x_j(t + \Delta t))}{2} \right\}$$

where

Mp is the penalty coefficient that is a negative real number,
k is any integer of 1 through M, both inclusive,
zk,i represents an i-th constrained value included in a k-th constrained solution in the M constrained solutions, and
zkj represents a j-th constrained value included in the k-th constrained solution.

**7.** The calculation device according to claim 5, wherein, when the first value is -1 and the second value is 1, $\partial P(t)/\partial xi(t)$ is calculated by Equation (108),

$$\frac{\partial P(t)}{\partial x_i(t)} = M_p \sum_{k=1}^{M} \frac{\partial p_k(t)}{\partial x_i(t)} \tag{108}$$

$$\frac{\partial p_k(t)}{\partial x_i(t)} = \frac{p_k(t)}{z_{k,i}(x_i(t) + 1) + (1 - z_{k,i})(x_i(t) - 1)}$$

$$p_k(t) = \prod_{j=1}^{N} \left\{ \frac{z_{k,j}(x_j(t) + 1)}{2} + \frac{(1 - z_{k,j})(1 - x_j(t))}{2} \right\}$$

where

Mp is the penalty coefficient that is a negative real number,
k is any integer of 1 through M, both inclusive,
zk,i represents an i-th constrained value included in a k-th constrained solution in the M constrained solutions, and
zkj represents a j-th constrained value included in the k-th constrained solution.

**8.** The calculation device according to claim 6 or 7, further comprising a penalty calculation module (27) configured to calculate the penalty component of the target particle, the penalty calculation module including

a preceding stage circuit (41) configured to calculate the M partial penalty values every unit time, and
a subsequent stage circuit (43) configured to calculate, for each of the N particles, the penalty component of the target particle every unit time, wherein
the preceding stage circuit (41) is configured to calculate, for each of the M constrained solutions, pk that is a k-th partial penalty value in the M partial penalty values by computing Equation (109), and

$$p_k = \prod_{j=1}^{N} \left\{ \frac{z_{k,j}(x_j + 1)}{2} + \frac{(1 - z_{k,j})(1 - x_j)}{2} \right\} \tag{109}$$

the subsequent stage circuit (43) is configured to calculate $\partial P/\partial xi$ that is the penalty component of an i-th particle in the N particles by computing Equations (110) and (111)

$$\frac{\partial p_k}{\partial x_i} = \frac{p_k}{z_{k,i}(x_i + 1) + (1 - z_{k,i})(x_i - 1)} \tag{110}$$

$$\frac{\partial P}{\partial x_i} = M_p \sum_{k=1}^{M} \frac{\partial p_k}{\partial x_i} \tag{111}.$$

**9.** The calculation device according to claim 8, wherein

the preceding stage circuit (41) includes M first partial circuits (61-1, ..., 61-M) corresponding to the M constrained solutions,
each of the M first partial circuits is configured to perform a computation in Equation (109), and
the M first partial circuits is configured to perform computations in parallel.

10. The calculation device according to claim 8, wherein

the preceding stage circuit (41) includes

N second partial circuits (62-1, ..., 62-N) corresponding to the N particles, and
a total multiplier circuit (63),

each of the N second partial circuits is configured to perform, for each of the M constrained solutions, a computation of an expression inside parentheses of $\Pi$ in Equation (109) for a corresponding particle,
the N second partial circuits are configured to perform computations in parallel, and
the total multiplier circuit is configured to perform, for each of the M constrained solutions, a computation of $\Pi$ in Equation (119) by multiplying N computation results output from the N second partial circuits.

11. The calculation device according to any one of claims 8 to 10, wherein

the subsequent stage circuit (43) includes

M third partial circuits (71-1, ..., 71-M) corresponding to the M constrained solutions,
a total adder circuit (72), and
a coefficient multiplier circuit (70),

each of the M third partial circuits is configured to perform a computation in Equation (110),
the M third partial circuits are configured to perform, for each of the N particles, computations in parallel,
the total adder circuit is configured to perform a computation of $\Sigma$ in Equation (111), for each of the N particles, and
the coefficient multiplier circuit is configured to perform, for each of the N particles, multiplication of the penalty coefficient in Equation (111).

12. The calculation device according to any one of claims 8 to 10, wherein

the subsequent stage circuit (43) includes N fourth partial circuits (73-1, ..., 73-N) corresponding to the N particles,
each of the N fourth partial circuits is configured to perform computations in Equations (110) and (111), and
the N fourth partial circuits are configured to perform computations in parallel.

13. The calculation device according to any one of claims 1 to 12, further comprising a control module (30) configured to

cause the updating module (28) to perform, multiple times, a calculation process from the start time to the end time, and
cause the output module to output, multiple times, a solution for the 0-1 optimization problem.

14. The calculation device according to claim 13, further comprising an addition module (32) configured to, when the calculation process is performed, add the calculated solution for the 0-1 optimization problem as one of the M constrained solutions.

15. The calculation device according to claim 14, further comprising an erasure module (33) configured to erase the M constrained solutions when the 0-1 optimization problem is changed,
wherein the updating module (28) is configured to set the penalty component of the target particle to 0 in a calculation process initially performed after the 0-1 optimization problem is updated.

# FIG.1

# FIG.2

# FIG.3

10

```
                                                        ┌──────────┐ ⌐32
                                                        │  ADDI-   │
                                                        │  TION    │
                                                        │ MODULE   │
                                                        └──────────┘
    ┌─────────┐ ⌐21              ┌─────────┐ ⌐23        ┌──────────┐ ⌐33
    │ J MEM-  │                  │ z MEM-  │            │  ERAS-   │
    │  ORY    │                  │  ORY    │            │  URE     │
    └─────────┘                  └─────────┘            │ MODULE   │
                                                        └──────────┘
 26                                        ⌐27                    ⌐29
┌────────┐   ┌──────────────┐ ⌐28  ┌──────────┐      ┌──────────┐
│SETTING │   │              │      │ PENALTY  │      │  OUTPUT  │
│ MODULE │   │   UPDATING   │◄─────│ CALCU-   │      │  MODULE  │
└────────┘   │   MODULE     │      │ LATION   │      └──────────┘
             └──────────────┘      │ MODULE   │
                                   └──────────┘
    ┌─────────┐ ⌐25  ┌─────────┐ ⌐24
    │ y MEM-  │      │ x MEM-  │
    │  ORY    │      │  ORY    │
    └─────────┘      └─────────┘

             ┌──────────┐ ⌐30
             │  CON-    │
             │  TROL    │
             │ MODULE   │
             └──────────┘
```

# FIG.4

# FIG.5

10

# FIG.6

START

SET PARAMETERS ($a_0$, $c_0$, D, $\alpha(t)$, $\Delta t$, T) — S101

INITIALIZE VARIABLES (t, $x_1(0)$ TO $x_N(0)$, $y_1(0)$ TO $y_N(0)$) — S102

t<T — S103

i=1 TO N — S104

X IS UPDATED ( + $\Delta$ = + $\Delta$ ) — S105

$|x_i(t+\Delta t)|>1$? — S106

YES

X IS CONSTRAINED — S107

Y IS CONSTRAINED — S108

NO

i=1 TO N — S109

i=1 TO N — S110

ACTION COMPUTATION

( + $\Delta$ = - $_0$ - + $\Delta$ + $\Delta$ + $_0$ . + $\Delta$ )

$_{=1}$

— S111

PENALTY COMPONENT IS CALCULATED ( $\dfrac{+\Delta}{+\Delta}$ ) — S112

Y IS UPDATED ( + $\Delta$ = + + $\Delta$ + $\dfrac{+\Delta}{+\Delta}$ $\Delta$ ) — S113

i=1 TO N — S114

t=t+$\Delta t$ — S115

t<T — S116

END

# FIG.7

```
                    ┌─────────────┐
                    │   START     │
                    └──────┬──────┘
                           ▼
┌────────────────────────────────────────────────┐
│  SET PARAMETERS (a₀, c₀, D, α(t), Δt, T)         │───── S101
└──────────────────────┬─────────────────────────┘
                       ▼
┌────────────────────────────────────────────────┐
│  INITIALIZE VARIABLES (t, x₁(0) TO xₙ(0),        │───── S102
│  y₁(0) TO yₙ(0))                                 │
└──────────────────────┬─────────────────────────┘
                       ▼
┌────────────────────────────────────────────────┐
│                    t<T                           │───── S103
└──────────────────────┬─────────────────────────┘
                       ▼
┌────────────────────────────────────────────────┐
│                 i=1 TO N                         │───── S121
└──────────────────────┬─────────────────────────┘
                       ▼
┌────────────────────────────────────────────────┐
│              ACTION COMPUTATION                  │───── S122
│     (      = −  ₀ −          +  ₀      ,    )     │
│                                    ₌₁            │
└──────────────────────┬─────────────────────────┘
                       ▼
┌────────────────────────────────────────────────┐
│   PENALTY COMPONENT IS CALCULATED ( ───── )      │───── S123
└──────────────────────┬─────────────────────────┘
                       ▼
┌────────────────────────────────────────────────┐
│   Y IS UPDATED (    +Δ   =    +      +──── Δ  )   │───── S124
└──────────────────────┬─────────────────────────┘
                       ▼
┌────────────────────────────────────────────────┐
│                 i=1 TO N                         │───── S125
└──────────────────────┬─────────────────────────┘
                       ▼
┌────────────────────────────────────────────────┐
│                 i=1 TO N                         │───── S126
└──────────────────────┬─────────────────────────┘
                       ▼
┌────────────────────────────────────────────────┐
│   X IS UPDATED (    +Δ   =    +      +Δ  Δ  )     │───── S127
└──────────────────────┬─────────────────────────┘
                       ▼
                                         ┌ S106
              ◇─────────────────────────◇        YES
         ◇      |xᵢ(t+Δt)|>1?            ◇ ────────────┐
              ◇─────────────────────────◇             ▼     ┌ S107
                       │ NO                     ┌──────────────────┐
                       │                        │  X IS CONSTRAINED │
                       │                        └─────────┬────────┘
                       │                                  ▼     ┌ S108
                       │                        ┌──────────────────┐
                       │                        │  Y IS CONSTRAINED │
                       │                        └─────────┬────────┘
                       │◄─────────────────────────────────┘
                       ▼
┌────────────────────────────────────────────────┐
│                 i=1 TO N                         │───── S129
└──────────────────────┬─────────────────────────┘
                       ▼
┌────────────────────────────────────────────────┐
│                  t=t+Δt                          │───── S115
└──────────────────────┬─────────────────────────┘
                       ▼
┌────────────────────────────────────────────────┐
│                    t<T                           │───── S116
└──────────────────────┬─────────────────────────┘
                       ▼
                ┌─────────────┐
                │    END      │
                └─────────────┘
```

# FIG.8

```
                              ┌─23
                    ┌──────────────────┐
                    │     z MEMORY     │
                    └──────────────────┘
```

PENALTY CALCULATION MODULE ─27

```
        ┌41              ┌42              ┌43
  ┌────────────┐   ┌────────────┐   ┌────────────┐
  │ PRECEDING  │   │            │   │ SUBSEQUENT │
30→│   STAGE    │──→│  p MEMORY  │──→│   STAGE    │──→28
  │  CIRCUIT   │   │            │   │  CIRCUIT   │
30→└────────────┘   └────────────┘   └────────────┘
```

```
                    ┌──────────────────┐
                    │     x MEMORY     │  ～24
                    └──────────────────┘
```

# FIG.9

PRECEDING STAGE CIRCUIT ─41

READ IN RASTER SCAN IN ROW DIRECTION

SEQUENTIAL READ OF N $x_i$ IS REPEATED M TIMES

RESET TO 1 EVERY N CYCLE

# FIG.10

# FIG.11

# FIG.12

SEQUENTIAL READING OF
M $p_k$ IS REPEATED N TIMES

READ IN
RASTER SCAN IN
COLUMN DIRECTION

READ M TIMES IN
SUCCESSION FOR
EACH OF N $x_i$

SUBSEQUENT STAGE CIRCUIT

RESET TO
0 EVERY
M CYCLES

# FIG.13

# FIG.14

# FIG.15

100

NETWORK ◄──► | HOST DEVICE (110) | ◄── INTERFACE ──► | CALCULATION DEVICE (10) |

# FIG.16

100

HOST DEVICE (110)

INPUT DATA (EVENT PACKET) ──► RECEIVING MODULE (121) ──► INPUT CONVERSION MODULE (122) ──► CALCULATION INSTRUCTION MODULE (124) ── J, Z ──► CALCULATION DEVICE (10)

SOLUTION LIST STORAGE MODULE (123)

OUTPUT DATA (ORDER PACKET) ◄── TRANSMITTING MODULE (127) ◄── OUTPUT CONVERSION MODULE (126) ◄── RESPONSE PROCESSING MODULE (125) ◄── SOLUTION ── CALCULATION DEVICE (10)

# FIG.17

**HOST DEVICE** (110), 100

INPUT DATA (EVENT PACKET) → RECEIVING MODULE (121) → INPUT CONVERSION MODULE (122) → PROBLEM STORAGE MODULE (128) → CALCULATION INSTRUCTION MODULE (124) → J, Z → CALCULATION DEVICE (10)

SOLUTION LIST STORAGE MODULE (123)

OUTPUT DATA (ORDER PACKET) ← TRANSMITTING MODULE (127) ← OUTPUT CONVERSION MODULE (126) ← RESPONSE PROCESSING MODULE (125) ← SOLUTION ← CALCULATION DEVICE

# FIG.18

START

S31 IS PROBLEM UPDATED?
- YES → S32 PROBLEM IS TRANSMITTED → S33 CONSTRAINED SOLUTIONS ARE CLEARED → S34 EXECUTION INSTRUCTION
- NO

S35 ARE CONSTRAINED SOLUTIONS UPDATED?
- YES → S36 UPDATED CONSTRAINED SOLUTIONS ARE TRANSMITTED
- NO

Europäisches
Patentamt

European
Patent Office

Office européen
des brevets

# EUROPEAN SEARCH REPORT

**Application Number**

EP 22 18 9452

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | H. GOTO ET AL: "High-performance combinatorial optimization based on classical mechanics", SCIENCE ADVANCES, vol. 7, no. 6, EABE7953, 3 February 2021 (2021-02-03), XP093057099, DOI: 10.1126/sciadv.abe7953 * sections "Results" and "Methods" * | 1-15 | INV. G06N5/01 G06N7/01 G06N7/08 |
| X | K. TATSUMURA ET AL: "Scaling out Ising machines using a multi-chip architecture for simulated bifurcation", NATURE ELECTRONICS, vol. 4, no. 3, March 2021 (2021-03), pages 208-217, XP093057100, DOI: 10.1038/s41928-021-00546-4 * section "Methods" * | 1-15 | |
| A | S. T. GOH ET AL: "A hybrid framework using a QUBO solver for permutation-based combinatorial optimization", ARXIV.ORG, CORNELL UNIVERSITY LIBRARY, 201 OLIN LIBRARY CORNELL UNIVERSITY ITHACA, NY 14853, 6 July 2021 (2021-07-06), XP091000804, DOI: 10.48550/arXiv.2009.12767 * section 3.4 * | 1-15 | **TECHNICAL FIELDS SEARCHED (IPC)** G06N |
| A | D. PASTORELLO, E. BLANZIERI: "Quantum annealing learning search for solving QUBO problems", QUANTUM INFORMATION PROCESSING, vol. 18, no. 10, 20 August 2019 (2019-08-20), XP036893761, DOI: 10.1007/S11128-019-2418-Z * section 2 * | 1-15 | |

-/--

The present search report has been drawn up for all claims

| Place of search | Date of completion of the search | Examiner |
|---|---|---|
| The Hague | 23 June 2023 | Douarche, Nicolas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

**Application Number**

**EP 22 18 9452**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | N. QIAN: "On the momentum term in gradient descent learning algorithms", NEURAL NETWORKS, vol. 12, no. 1, January 1999 (1999-01), pages 145-151, XP004156070, DOI: 10.1016/S0893-6080(98)00116-6 * section 2 * | 1-15 | |

TECHNICAL FIELDS
SEARCHED      (IPC)

The present search report has been drawn up for all claims

| Place of search | Date of completion of the search | Examiner |
|---|---|---|
| The Hague | 23 June 2023 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HAYATO GOTO ; KOTARO ENDO ; MASARU SUZUKI ; YOSHISATO SAKAI ; TARO KANAO ; YOHEI HAMAKAWA ; RYO HIDAKA ; MASAYA YAMASAKI ; KOSUKE TATSUMURA.** High-performance combinatorial optimization based on classical mechanics. *Science Advances,* 2021, vol. 7 (6), eabe7953